(19) **Europäisches Patentamt European Patent Office Office européen des brevets**

(11) **EP 4 015 544 B1**

(12) **EUROPEAN PATENT SPECIFICATION**

(45) Date of publication and mention of the grant of the patent:
**07.01.2026 Bulletin 2026/02**

(21) Application number: **20851982.7**

(22) Date of filing: **11.08.2020**

(51) International Patent Classification (IPC):
C08L 33/02 (2006.01)   C08L 33/26 (2006.01)
H01M 4/36 (2006.01)   H01M 4/48 (2010.01)
H01M 4/13 (2010.01)   H01M 4/139 (2010.01)
H01M 4/62 (2006.01)   C08L 25/18 (2006.01)
C08L 35/00 (2006.01)   C08L 47/00 (2006.01)
H01G 11/38 (2013.01)   H01G 11/28 (2013.01)
H01G 11/30 (2013.01)   C08F 220/44 (2006.01)
C08F 236/06 (2006.01)   C08F 220/06 (2006.01)
C08F 220/56 (2006.01)   H01M 10/0525 (2010.01)
H01M 4/02 (2006.01)   C08F 212/08 (2006.01)

(52) Cooperative Patent Classification (CPC):
(C-Sets available)
H01M 4/366; C08F 236/06; C08L 25/18;
C08L 33/02; C08L 33/26; C08L 35/00; H01G 11/30;
H01G 11/38; H01M 4/13; H01M 4/139; H01M 4/483;
H01M 4/622; C08F 212/08; C08F 212/30;
C08F 220/06;                                      (Cont.)

(86) International application number:
**PCT/JP2020/030621**

(87) International publication number:
**WO 2021/029411 (18.02.2021 Gazette 2021/07)**

(54) **COMPOSITION FOR ELECTRICITY STORAGE DEVICES, SLURRY FOR ELECTRICITY STORAGE DEVICE ELECTRODES, ELECTRICITY STORAGE DEVICE ELECTRODE, AND ELECTRICITY STORAGE DEVICE**

ZUSAMMENSETZUNG FÜR STROMSPEICHERVORRICHTUNGEN, AUFSCHLÄMMUNG FÜR ELEKTRODEN EINER STROMSPEICHERVORRICHTUNG, ELEKTRODE EINER STROMSPEICHERVORRICHTUNG UND STROMSPEICHERVORRICHTUNG

COMPOSITION POUR DISPOSITIFS DE STOCKAGE D'ÉLECTRICITÉ, SUSPENSION POUR ÉLECTRODES DE DISPOSITIF DE STOCKAGE D'ÉLECTRICITÉ, ÉLECTRODE DE DISPOSITIF DE STOCKAGE D'ÉLECTRICITÉ ET DISPOSITIF DE STOCKAGE D'ÉLECTRICITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2019 JP 2019148414**

(43) Date of publication of application:
**22.06.2022 Bulletin 2022/25**

(73) Proprietor: **ENEOS Materials Corporation Tokyo 105-7109 (JP)**

(72) Inventors:
• **NAKAYAMA, Takuya**
**Tokyo 105-8640 (JP)**
• **TONERI, Tatsuya**
**Tokyo 105-8640 (JP)**
• **MASUDA, Kana**
**Tokyo 105-8640 (JP)**

(74) Representative: **TBK**
**Bavariaring 4-6**
**80336 München (DE)**

EP 4 015 544 B1

(56) References cited:
| | |
|---|---|
| **EP-A1- 3 214 676** | **WO-A1-2015/064464** |
| **WO-A1-2017/029902** | **WO-A1-2019/065471** |
| **JP-B2- 5 862 878** | **JP-B2- 5 991 321** |
| **US-A1- 2015 132 644** | **US-A1- 2016 036 055** |
| **US-A1- 2018 258 202** | |

(52) Cooperative Patent Classification (CPC): (Cont.)
C08F 220/44; C08F 220/56; C08F 222/102;
H01G 11/28; H01M 10/0525; H01M 2004/027;
Y02E 60/10

C-Sets
**C08F 236/06, C08F 220/06, C08F 222/102,
C08F 212/08, C08F 222/102, C08F 220/44;
C08F 236/06, C08F 220/44, C08F 220/06;
C08F 236/06, C08F 220/44, C08F 220/06,
C08F 220/06, C08F 220/56;
C08F 236/06, C08F 220/44, C08F 220/06,
C08F 222/102, C08F 220/14, C08F 220/1804,
C08F 220/1808, C08F 220/1806, C08F 222/102;
C08F 236/06, C08F 220/44, C08F 222/102,
C08F 220/06;
C08L 25/18, C08L 33/02;
C08L 25/18, C08L 33/18;
C08L 25/18, C08L 47/00;
C08L 33/02, C08L 33/26;
C08L 33/26, C08L 25/04;
C08L 33/26, C08L 33/02;
C08L 33/26, C08L 33/12;
C08L 33/26, C08L 47/00;**

C08F 212/08, C08F 236/06, C08F 220/14,
C08F 220/20, C08F 220/06, C08F 220/44;
C08F 212/30, C08F 212/08, C08F 220/14,
C08F 236/06, C08F 220/20, C08F 220/56,
C08F 220/06;
C08F 212/30, C08F 220/1806, C08F 220/56,
C08F 220/56, C08F 220/06;
C08F 212/30, C08F 220/20, C08F 220/20,
C08F 220/1804, C08F 212/08, C08F 220/44,
C08F 220/56, C08F 220/06, C08F 222/02;
C08F 220/06, C08F 220/06, C08F 222/02,
C08F 220/56;
C08F 220/06, C08F 220/56, C08F 222/02,
C08F 220/06;
C08F 220/44, C08F 212/08, C08F 236/06,
C08F 220/44, C08F 220/06;
C08F 220/44, C08F 220/06, C08F 236/06,
C08F 212/08;
C08F 220/44, C08F 220/06, C08F 236/06,
C08F 220/56, C08F 212/30;
C08F 220/44, C08F 236/06, C08F 220/06,
C08F 220/56;
C08F 220/56, C08F 220/06;
C08F 220/56, C08F 220/06, C08F 220/06,
C08F 222/02, C08F 236/06, C08F 212/36;
C08F 220/56, C08F 220/06, C08F 236/06,
C08F 220/20, C08F 212/36, C08F 222/102;
C08F 220/56, C08F 220/56, C08F 220/06;
C08F 222/102, C08F 220/06, C08F 220/06,
C08F 236/06, C08F 220/56, C08F 212/08;
C08F 222/102, C08F 220/56

## Description

TECHNICAL FIELD

The present invention relates to a composition for an electrical storage device, a slurry for an electrical storage device electrode, containing the composition and an active material, an electrical storage device electrode formed by applying the slurry to a current collector and drying the resultant, and an electrical storage device including the electrode.

BACKGROUND ART

In recent years, an electrical storage device having a high voltage and a high energy density has been demanded as a power source for driving electronic equipment. A lithium ion battery, a lithium ion capacitor, or the like is promising as such electrical storage device.

An electrode to be used for such electrical storage device is typically produced by applying a composition (slurry for an electrode) containing an active material and a polymer that functions as a binder to a surface of a current collector and drying the resultant. Characteristics demanded of the polymer to be used as a binder may include: a binding ability between the active materials; an adhesive ability between the active material and the current collector; abrasion resistance in a process of winding the electrode; and powder fall-off resistance that prevents fine powder or the like of the active material from being detached from a coating film of the applied and dried composition (hereinafter sometimes referred to as "active material layer") even in subsequent cutting or the like.

With regard to the binding ability between the active materials, the adhesive ability between the active material and the current collector, and the powder fall-off resistance, it has been empirically revealed that their qualities of performance have a nearly proportional relationship with each other. Accordingly, those properties are hereinafter sometimes collectively referred to with the term "adhesiveness".

In recent years, from the viewpoint of achieving demands of increases in output and energy density of the electrical storage device, investigations have been made on utilization of a material having a large lithium storage capacity as the active material. For example, as disclosed in Patent Literature 1, a technique involving making good use of a silicon material having a theoretical storage capacity for lithium of up to about 4,200 mAh/g as the active material is regarded as promising.

However, the active material utilizing such material having a large lithium storage capacity undergoes a large volume change through storage and release of lithium. Accordingly, when a hitherto used binder for an electrode is applied to such material having a large lithium storage capacity, adhesiveness cannot be maintained. Consequently, peeling or the like of the active material occurs to cause a remarkable decrease in capacity along with charge and discharge.

As a technology for improving the adhesiveness of the binder for an electrode, there are proposals of, for example, a technology involving controlling a surface acid content of particles of a particulate binder (see Patent Literatures 2 and 3), and a technology involving improving the above-mentioned characteristic through use of a binder having an epoxy group or a hydroxy group (see Patent Literatures 4 and 5). In addition, there is a proposal of, for example, a technology intended to suppress the volume change of the active material by restraining the active material with a rigid molecular structure of polyimide (see Patent Literature 6).

Meanwhile, as a positive electrode active material that is highly safe, a lithium-containing phosphoric acid compound having an olivine structure (hereinafter sometimes referred to as "olivine-type lithium-containing phosphoric acid compound") is drawing attention. The olivine-type lithium-containing phosphoric acid compound has high thermal stability by virtue of covalent bonding between phosphorus and oxygen, and hence does not release oxygen even under high temperature.

However, the olivine-type lithium-containing phosphoric acid compound has a Li ion storage-release voltage of about 3.4 V, and hence has a low output voltage. In order to compensate for this drawback, attempts have been made to improve characteristics of peripheral materials, such as a binder for an electrode and an electrolytic solution (see Patent Literatures 7 to 9).

CITATION LIST

Patent Literature

PTL 1: JP 2004-185810 A
PTL 2: WO 2011/096463 A1
PTL 3: WO 2013/191080 A1

PTL 4: JP 2010-205722 A
PTL 5: JP 2010-3703 A
PTL 6: JP 2011-204592 A
PTL 8: WO 2010/113940 A1
PTL 9: JP 2012-216322 A

Further, US2015132644A1 discloses a negative electrode slurry composition and a lithium ion negative battery. US2018258202A1 discloses a binder composition for a non-aqueous secondary battery electrode. WO2019065471A1 discloses an electrochemical-element binder composition. EP3214676A1 discloses a material for slurry composition-use for lithium ion secondary battery using a silicon-based negative electrode active material. US2016036055A1 discloses a slurry composition including a negative electrode active material, a particulate binder, a water soluble polymer, and water.

SUMMARY OF INVENTION

Technical Problem

However, none of such binders for electrodes as disclosed in Patent Literatures 1 to 6 described above can be said to have sufficient adhesiveness for putting into practical use a new active material typified by a silicon material having a large lithium storage capacity and undergoing a large volume change along with the storage and release of lithium. When any of such binders for electrodes is used, detachment or the like of the active material occurs through repeated charge and discharge, leading to electrode deterioration. Accordingly, there is a problem in that durability required for practical use is not sufficiently obtained.

In addition, with such technology as disclosed in Patent Literatures 7 to 9 described above, which involves improving characteristics of peripheral materials, such as a binder for an electrode and an electrolytic solution, it has been difficult to sufficiently improve the charge-discharge durability characteristic of an electrical storage device including a positive electrode using the olivine-type lithium-containing phosphoric acid compound as a positive electrode active material.

In view of the foregoing, some aspects according to the invention provide a composition for an electrical storage device, which enables the production of an electrical storage device electrode being excellent in adhesiveness, and showing a satisfactory charge-discharge durability characteristic. In addition, some aspects according to the invention provide a slurry for an electrical storage device electrode, which contains the composition. In addition, some aspects according to the invention provide an electrical storage device electrode being excellent in adhesiveness, and showing a satisfactory charge-discharge durability characteristic. Further, some aspects according to the invention provide an electrical storage device excellent in charge-discharge durability characteristic.

Solution to Problem

The invention has been made in order to solve at least part of the above-mentioned problems, and can be realized as any one of the following aspects.

According to one aspect of the invention, there is provided a composition for an electrical storage device, including:

polymer particles (A);
a water-soluble polymer (B); and
a liquid medium (C),
wherein the polymer particles (A) each contain, with respect to 100 parts by mass in total of repeating units contained in the polymer particle (A),

20 parts by mass to 65 parts by mass of a repeating unit (a1) derived from a conjugated diene compound, and
1 part by mass to 30 parts by mass of a repeating unit (a2) derived from an $\alpha,\beta$-unsaturated nitrile compound, and

wherein the polymer (B) contains, with respect to 100 parts by mass in total of repeating units contained in the polymer (B),

5 parts by mass to 95 parts by mass of a repeating unit (b 1) derived from an unsaturated carboxylic acid, and
5 parts by mass to 95 parts by mass of a repeating unit (b2) derived from
5 parts by mass to 95 parts by mass of a repeating unit (b2) derived from (meth)acrylamide.

In the above aspect of the composition for an electrical storage device, the composition for an electrical storage device may have a value for Mb/Ma of from 0.25 to 99, where Ma represents a content of the polymer particles (A) in parts by mass, and Mb represents a content of the polymer (B) in parts by mass.

In any of the above aspects of the composition for an electrical storage device, the polymer particles (A) may have a number average particle diameter of 50 nm or more and 500 nm or less.

In any of the above aspects of the composition for an electrical storage device, the liquid medium (C) may be water.

According to one aspect of the invention, there is provided a slurry for an electrical storage device electrode, including:

> the composition for an electrical storage device of any one of the above-mentioned aspects; and
> an active material.

In the above aspect of the slurry for an electrical storage device electrode, the active material may be a silicon material.

In any of the above aspects of the slurry for an electrical storage device electrode, the slurry for an electrical storage device electrode may further include a thickener.

According to one aspect of the invention, there is provided an electrical storage device electrode including:

> a current collector; and
> an active material layer formed on a surface of the current collector by applying and drying the slurry for an electrical storage device electrode of any one of the above-mentioned aspects.

According to one aspect of the invention, there is provided an electrical storage device including the electrical storage device electrode of the above-mentioned aspect.

ADVANTAGEOUS EFFECTS OF INVENTION

The composition for an electrical storage device according to the invention is excellent in adhesiveness, and hence enables the production of an electrical storage device electrode showing a satisfactory charge-discharge durability characteristic. The composition for an electrical storage device according to the invention exhibits the above-mentioned effect particularly when the electrical storage device electrode contains, as an active material, a material having a large lithium storage capacity, such as a carbon material like graphite or a silicon material.

DESCRIPTION OF EMBODIMENTS

Preferred embodiments of the invention are described in detail below. It should be appreciated that the invention is not limited to the following embodiments, and includes various modification examples performed within the scope of the invention.

Herein, "(meth)acrylic acid ···" is a concept comprehending both of "acrylic acid ···" and "methacrylic acid ···". Similarly, "··· (meth)acrylate" is a concept comprehending both of "··· acrylate" and "··· methacrylate". Similarly, "(meth) acrylamide" is a concept comprehending both of "acrylamide" and "methacrylamide".

Herein, a numerical range described with "to" is meant to include numerical values stated before and after "to" as a lower limit value and an upper limit value, respectively.

1. Composition for Electrical Storage Device

A composition for an electrical storage device according to an embodiment of the invention contains polymer particles (A), a polymer (B), and a liquid medium (C). The composition for an electrical storage device according to this embodiment may be used as a material for producing an electrical storage device electrode (active material layer) improved in binding ability between active materials and adhesive ability between the active material and a current collector, and in powder fall-off resistance, and may also be used as a material for forming a protective film for suppressing a short circuit due to dendrites generated along with charge and discharge. Each component contained in the composition for an electrical storage device according to this embodiment is described in detail below.

1.1. Polymer Particles (A)

The polymer particles (A) contained in the composition for an electrical storage device according to this embodiment are in the form of latex dispersed in the liquid medium (C). A case in which the polymer particles (A) are in the form of latex dispersed in the liquid medium (C) is preferred because the stability of a slurry for an electrical storage device electrode (hereinafter sometimes referred to simply as "slurry") produced coating property of the slurry for a current collector becomes satisfactory.

The polymer particles (A) each contain, with respect to 100 parts by mass in total of the repeating units in the polymer particle (A), 20 parts by mass to 65 parts by mass of a repeating unit (a1) derived from a conjugated diene compound (hereinafter sometimes referred to as "repeating unit (a1)"), and 1 part by mass to 30 parts by mass of a repeating unit (a2) derived from an $\alpha,\beta$-unsaturated nitrile compound (hereinafter sometimes referred to as "repeating unit (a2)"). In addition, the polymer particles (A) may each contain, in addition to the above-mentioned repeating units, a repeating unit derived from another monomer copolymerizable therewith.

The constituent repeating units of the polymer particles (A), the physical properties of the polymer particles (A), and a synthesis method for the polymer particles (A) are described below in the stated order.

1.1.1. Constituent Repeating Units of Polymer Particles (A)

1.1.1.1. Repeating Unit (a1) derived from Conjugated Diene Compound

The content ratio of the repeating unit (a1) derived from a conjugated diene compound is from 20 parts by mass to 65 parts by mass with respect to 100 parts by mass in total of the repeating units contained in each of the polymer particles (A). The lower limit of the content ratio of the repeating unit (a1) is preferably 22 parts by mass, more preferably 25 parts by mass. The upper limit of the content ratio of the repeating unit (a1) is preferably 60 parts by mass, more preferably 55 parts by mass. When the polymer particles (A) each contain the repeating unit (a1) within the above-mentioned ranges, the dispersibility of an active material or a filler becomes satisfactory to enable the production of a uniform active material layer or protective film, and hence a structural defect of an electrode plate is eliminated, with the result that a satisfactory charge-discharge characteristic is shown. In addition, stretching and shrinking properties can be imparted to the polymer particles (A) covering the surface of the active material, and adhesiveness can be improved by virtue of stretching and shrinking of the polymer, with the result that a satisfactory charge-discharge durability characteristic is shown.

The conjugated diene compound is not particularly limited, but examples thereof may include 1,3-butadiene, 2-methyl-1,3-butadiene, 2,3-dimethyl-1,3-butadiene, and 2-chloro-1,3-butadiene, and one or more kinds selected therefrom may be used. Of those, 1,3-butadiene is particularly preferred.

1.1.1.2. Repeating Unit (a2) derived from $\alpha,\beta$-Unsaturated Nitrile Compound

The content ratio of the repeating unit (a2) derived from an $\alpha,\beta$-unsaturated nitrile compound is from 1 part by mass to 30 parts by mass with respect to 100 parts by mass in total of repeating units contained in each of the polymer particles (A). The lower limit of the content ratio of the repeating unit (a2) is preferably 3 parts by mass, more preferably 5 parts by mass. The upper limit of the content ratio of the repeating unit (a2) is 30 parts by mass. When the polymer particles (A) each contain the repeating unit (a2) within the above-mentioned ranges, the dissolution of the polymer particles (A) in an electrolytic solution can be reduced, and hence a decrease in adhesiveness due to the electrolytic solution can be suppressed. In addition, an increase in internal resistance caused by a dissolved polymer component serving as an electrical resistance component in an electrical storage device can be suppressed.

The $\alpha,\beta$-unsaturated nitrile compound is not particularly limited, but examples thereof include acrylonitrile, methacrylonitrile, $\alpha$-chloroacrylonitrile, $\alpha$-ethylacrylonitrile and vinylidene cyanide, and one or more kinds selected therefrom may be used. Of and vinylidene cyanide, and one or more kinds selected therefrom may be used. Of those, one or more kinds selected from the group consisting of: acrylonitrile; and methacrylonitrile are preferred, and acrylonitrile is particularly preferred.

1.1.1.3. Other Repeating Units

The polymer particles (A) may each contain, in addition to the repeating units (a1) and (a2), a repeating unit derived from another monomer copolymerizable therewith. Examples of such repeating unit include: a repeating unit (a3) derived from an aromatic vinyl compound (hereinafter sometimes referred to simply as "repeating unit (a3)"); a repeating unit (a4) derived from an unsaturated carboxylic acid (hereinafter sometimes referred to simply as "repeating unit (a4)"); a repeating unit (a5) derived from (meth)acrylamide (hereinafter sometimes referred to simply as "repeating unit (a5)"); a repeating unit (a6) derived from an unsaturated carboxylic acid ester (hereinafter sometimes referred to simply as "repeating unit (a6)"); a repeating unit (a7) derived from a compound having a sulfonic acid group (hereinafter sometimes referred to simply as "repeating unit (a7)"); and a repeating unit derived from a cationic monomer.

<Repeating Unit (a3) derived from Aromatic Vinyl Compound>

When the polymer particles (A) each contain the repeating unit (a3) derived from an aromatic vinyl compound, the content ratio of the repeating unit (a3) is preferably from 0 parts by mass to 50 parts by mass with respect to 100 parts by mass in total of the repeating units contained in the polymer particle (A). The lower limit of the content ratio of the repeating unit (a3) is preferably 3 parts by mass, more preferably 5 parts by mass. The upper limit of the content ratio of the repeating unit (a3) is preferably 40 parts by mass, more preferably 30 parts by mass. When the polymer particles (A) each contain the repeating unit (a3) within the above-mentioned ranges, the polymer particles (A) have a moderate binding force for graphite used as an active material, and hence an electrical storage device electrode excellent in flexibility and adhesiveness is obtained in some cases.

The aromatic vinyl compound is not particularly limited, but examples thereof include styrene, $\alpha$-methylstyrene, p-methylstyrene, vinyltoluene, chlorostyrene, and divinylbenzene, and one or more kinds selected therefrom may be used. Of those, one or more kinds selected from the group consisting of: styrene; and divinylbenzene are preferred, and styrene is particularly preferred.

<Repeating Unit (a4) derived from Unsaturated Carboxylic Acid>

When the polymer particles (A) each contain the repeating unit (a4) derived from an unsaturated carboxylic acid, the content ratio of the repeating unit (a4) is preferably from 1 part by mass to 40 parts by mass with respect to 100 parts by mass in total of the repeating units contained in the polymer particle (A). The lower limit of the content ratio of the repeating unit (a4) is preferably 3 parts by mass, more preferably 5 parts by mass. The upper limit of the content ratio of the repeating unit (a4) is preferably 35 parts by mass, more preferably 30 parts by mass. When the polymer particles (A) each contain the repeating unit (a4) within the above-mentioned ranges, the dispersibility of an active material or a filler becomes satisfactory in some cases. Further, affinity for a silicon material serving as the active material is improved to suppress swelling of the silicon material, and hence a satisfactory charge-discharge durability characteristic is shown in some cases.

The unsaturated carboxylic acid is not particularly limited, but examples thereof may include monocarboxylic acids and dicarboxylic acids (including anhydrides), such as acrylic acid, methacrylic acid, crotonic acid, maleic acid, fumaric acid, and itaconic acid, and one or more kinds selected therefrom may be used. Of those, one or more kinds selected from acrylic acid, methacrylic acid, and itaconic acid are preferably used.

<Repeating Unit (a5) derived from (Meth)acrylamide>

When the polymer particles (A) each contain the repeating unit (a5) derived from (meth)acrylamide, the content ratio of the repeating unit (a5) is preferably from 0 parts by mass to 10 parts by mass with respect to 100 parts by mass in total of the repeating units contained in the polymer particle (A). The lower limit of the content ratio of the repeating unit (a5) is preferably 0.5 part by mass, more preferably 1 part by mass. The upper limit of the content ratio of the repeating unit (a5) is preferably 9 parts by mass, more preferably 8 parts by mass. When the polymer particles (A) each contain the repeating unit (a5) within the above-mentioned ranges, the dispersibility of an active material or a filler in a slurry becomes satisfactory in some cases. In addition, an active material layer to be obtained has moderate flexibility, resulting in satisfactory adhesiveness between a current collector and the active material layer in some cases. Further, a binding ability between active materials containing a carbon material like graphite and a silicon material can be enhanced, and hence an active material layer that is more satisfactory in terms of flexibility and adhesive ability for a current collector is obtained in some cases.

The (meth)acrylamide is not particularly limited, but examples thereof include acrylamide, methacrylamide, N-isopropylacrylamide, N,N-dimethylacrylamide, N,N-dimethylmethacrylamide, N,N-diethylacrylamide, N,N-diethylmethacrylamide, N,N-dimethylaminopropylacrylamide, N,N-dimethylaminopropylmethacrylamide, N-methylolmethacrylamide, N-methylolacrylamide, diacetone acrylamide, maleic acid amide, and acrylamide tert-butylsulfonic acid, and one or more kinds selected therefrom may be used.

<Repeating Unit (a6) derived from Unsaturated Carboxylic Acid Ester>

When the polymer particles (A) each contain the repeating unit (a6) derived from an unsaturated carboxylic acid ester, the content ratio of the repeating unit (a6) is preferably from 0 parts by mass to 30 parts by mass with respect to 100 parts by mass in total of the repeating units contained in the polymer particle (A). The lower limit of the content ratio of the repeating unit (a6) is preferably 3 parts by mass, more preferably 5 parts by mass. The upper limit of the content ratio of the repeating unit (a6) is preferably 25 parts by mass, more preferably 20 parts by mass. When the polymer particles (A) each contain the repeating unit (a6) within the above-mentioned ranges, affinity between the polymer particles (A) and an electrolytic solution becomes satisfactory, and hence an increase in internal resistance caused by the binder serving as an electrical resistance component in an electrical storage device can be suppressed, and besides, a decrease in adhesiveness due to excessive absorption of the electrolytic solution can be prevented in some cases.

Of the unsaturated carboxylic acid esters, a (meth)acrylic acid ester may be preferably used. Specific examples of the (meth)acrylic acid ester include methyl (meth)acrylate, ethyl (meth)acrylate, n-propyl (meth)acrylate, isopropyl (meth)acrylate, n-butyl (meth)acrylate, isobutyl (meth)acrylate, n-amyl (meth)acrylate, isoamyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl (meth)acrylate, 2-hydroxymethyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, glycerin mono(meth)acrylate, and glycerin di(meth)acrylate, and one or more kinds selected therefrom may be used. Of those, one or more kinds selected from methyl (meth)acrylate, ethyl (meth)acrylate, and 2-ethylhexyl (meth)acrylate are preferred, and methyl (meth)acrylate is particularly preferred.

<Repeating Unit (a7) derived from Compound having Sulfonic Acid Group>

When the polymer particles (A) each contain the repeating unit (a7) derived from a compound having a sulfonic acid group, the content ratio of the repeating unit (a7) is preferably from 0 parts by mass to 10 parts by mass with respect to 100 parts by mass in total of the repeating units contained in the polymer particle (A). The lower limit of the content ratio of the repeating unit (a7) is preferably 0.5 part by mass, more preferably 1 part by mass. The upper limit of the content ratio of the repeating unit (a7) is preferably 9 parts by mass, more preferably 8 parts by mass.

The compound having a sulfonic acid group is not particularly limited, but examples thereof include vinylsulfonic acid, styrenesulfonic acid, allylsulfonic acid, sulfoethyl (meth)acrylate, sulfopropyl (meth)acrylate, sulfobutyl (meth)acrylate, 2-acrylamido-2-methylpropanesulfonic acid, 2-hydroxy-3-acrylamidopropanesulfonic acid, 3-allyloxy-2-hydroxypropanesulfonic acid, and alkali salts thereof, and one or more kinds selected therefrom may be used.

<Repeating Unit derived from Cationic Monomer>

The polymer particles (A) may each contain the repeating unit derived from a cationic monomer. The cationic monomer is not particularly limited, but is preferably at least one kind of monomer selected from the group consisting of: a secondary amine (salt); a tertiary amine (salt); and a quaternary ammonium salt. Specific examples of those cationic monomers include, but not particularly limited to, 2-(dimethylamino)ethyl (meth)acrylate, dimethylaminoethyl (meth)acrylate methyl chloride quaternary salt, 2-(diethylamino)ethyl (meth)acrylate, 3-(dimethylamino)propyl (meth)acrylate, 3-(diethylamino)propyl (meth)acrylate, 4-(dimethylamino)phenyl (meth)acrylate, 2-[(3,5-dimethylpyrazolyl)carbonylamino]ethyl (meth)acrylate, 2-(0-[1'-methylpropylideneamino]carboxyamino)ethyl (meth)acrylate, 2-(1-aziridinyl)ethyl (meth)acrylate, methacryloylcholine chloride, tris(2-acryloyloxyethyl) isocyanurate, 2-vinylpyridine, quinaldine red, 1,2-di(2-pyridyl)ethylene, 4'-hydrazino-2-stilbazole dihydrochloride hydrate, 4-(4-dimethylaminostyryl)quinoline, 1-vinylimidazole, diallylamine, diallylamine hydrochloride, triallylamine, diallyldimethylammonium chloride, dichlormid, N-allylbenzylamine, N-allylaniline, 2,4-diamino-6-diallylamino-1,3,5-triazine, N-trans-cinnamyl-N-methyl-(1-naphthylmethyl)amine hydrochloride, and trans-N-(6,6-dimethyl-2-hepten-4-yl)-N-methyl-1-naphthylmethylamine hydrochloride, and one or more kinds selected therefrom may be used.

1.1.2. Physical Properties of Polymer Particles (A)

1.1.2.1. Number Average Particle Diameter

The number average particle diameter of the polymer particles (A) is preferably 50 nm or more and 500 nm or less, more preferably 60 nm or more and 450 nm or less, particularly preferably 70 nm or more and 400 nm or less. When the number average particle diameter of the polymer particles (A) falls within the above-mentioned ranges, the polymer particles (A) are easily adsorbed onto the surface of the active material, and hence the polymer particles (A) can also move following the movement of the active material. As a result, migration can be suppressed, and hence a degradation in electrical characteristic can be reduced.

The number average particle diameter of the polymer particles (A) may be determined from a particle size distribution, the particle size distribution being measured scattering method as its measurement principle. For example, a model "FPAR-1000" manufactured by Otsuka Electronics Co., Ltd. may be used as the particle size distribution-measuring apparatus.

1.1.2.2. Viscosity

When a water dispersion of the polymer particles (A) having a solid content concentration of 5% and a pH of 9 is measured for its viscosity at a temperature of 25°C using a B-type viscometer, the viscosity is preferably from 1 mPa·s/30 rpm to 50 mPa·s/30 rpm, more preferably from 3 mPa·s/30 rpm to 45 mPa·s/30 rpm, particularly preferably from 5 mPa·s/30 rpm to 40 mPa·s/30 rpm. The viscosity measurement may be performed in conformity to JIS Z 8803. For example, "RB-80L" or "TVB-10" manufactured by Toki Sangyo Co., Ltd. may be used as the B-type viscometer.

1.1.2.3. Weight Average Molecular Weight (Mw)

The weight average molecular weight (Mw) of the tetrahydrofuran (THF)-soluble components of the polymer particles (A) is preferably 1,000 or more, more preferably 10,000 or more, particularly preferably 100,000 or more. When the weight average molecular weight (Mw) of the polymer particles (A) falls within the above-mentioned ranges, the adhesiveness becomes satisfactory, and hence an electrical storage device excellent in charge-discharge characteristic can be easily obtained. The weight average molecular weight of the polymer (A) may be measured using, for example, a GPC method under the following conditions.

10 mg of a polymer dispersion is mixed with 5 mL of THF, and the mixture is left to stand at 25°C for 16 hours and then passed through a 0.45 $\mu$m membrane filter to produce a sample for measurement. Then, under the following measurement conditions, the resultant sample for measurement is used to determine the weight average molecular the resultant sample for measurement is used to determine the weight average molecular weight (Mw) of the THF-soluble components in terms of polystyrene (RI detection) by gel permeation chromatography using the following column.

[Measurement Conditions]

·Temperature: 35°C
·Solvent: THF
·Flow rate: 1.0 mL/min
·Concentration: 0.2 wt%
·Measurement sample injection volume: 100 $\mu$L

[Column]

·"GPC TSKgel $\alpha$-2500" manufactured by Tosoh Corporation (30 cm×2) was used. (Measurement was performed under the condition that a linear correlation equation between $Log_{10}$(Mw) and elution time was 0.98 or more between an Mw of 1,000 and an Mw of 20,000,000.)

1.1.3. Synthesis Method for Polymer Particles (A)

The synthesis method for the polymer particles (A) is not particularly limited, but for example, the polymer particles (A) may be synthesized by an emulsion polymerization method to be performed in the presence of a known emulsifier (surfactant), chain transfer agent, polymerization initiator, and the like. Compounds described in JP 5999399 B2 and the like may be used as the emulsifier (surfactant), the chain transfer agent, and the polymerization initiator.

The polymerization initiator to be used at the time of the synthesis of the polymer particles (A) is preferably a water-soluble radical initiator, particularly preferably a persulfuric acid salt, such as lithium persulfate, potassium persulfate, sodium persulfate, or ammonium persulfate, or a water-soluble azo-based initiator, such as 4,4'-azobis(4-cyanovaleric acid). The use amount of the polymerization initiator is preferably from 0.1 part by mass to 5.0 parts by mass with respect to 100 parts by mass of the total mass of the monomers to be used for the polymerization.

A polymerization temperature at the time of the production of the polymer particles (A) is not particularly limited, but in consideration of, for example, a production time and the conversion rate (reaction ratio) of the monomers into a copolymer, the synthesis is performed within the range of preferably from 30°C to 95°C, more preferably from 50°C to 85°C. In addition, a pH adjusting agent, EDTA or a salt thereof, which serves as a sequestrant, or the like may also be used at the time of the polymerization for the purpose of improving production stability.

In addition, before the polymerization or after the polymerization, a pH may be adjusted with a general neutralizer, such as ammonia, an organic amine, potassium hydroxide, sodium hydroxide, or lithium hydroxide, and in that case, the pH is preferably adjusted to fall within the range of from 5 to 11. EDTA or a salt thereof, which serves as a sequestrant, or the like may also be used.

1.2. Polymer (B)

The polymer (B) contained in the composition for an electrical storage device according to this embodiment may be in the form of latex dispersed in the liquid medium (C), or may be in the state of being dissolved in the liquid medium (C), but is preferably in the state of being dissolved in the liquid medium (C). A case in which the polymer (B) is in the state of being dissolved in the liquid medium (C) is preferred because the stability of a slurry produced by mixing the composition with an active material becomes satisfactory, and besides, the coating property of the slurry for a current collector becomes satisfactory.

The polymer (B) contains, with respect to 100 parts by mass in total of the repeating units in the polymer (B), 5 parts by mass to 95 parts by mass of a repeating unit (b1) derived from an unsaturated carboxylic acid (hereinafter sometimes referred to as "repeating unit (b1)"), and 5 parts by mass to 95 parts by mass of a repeating unit (b2) derived from (meth)acrylamide (hereinafter sometimes referred to as "repeating unit (b2)"). In addition, the polymer (B) may contain, in addition to the above-mentioned repeating units, a repeating unit derived from another monomer copolymerizable therewith.

The constituent repeating units of the polymer (B), the physical properties of the polymer (B), and a synthesis method for the polymer (B) are described below in the stated order.

1.2.1. Constituent Repeating Units of Polymer (B)

1.2.1.1. Repeating Unit (b1) derived from Unsaturated Carboxylic Acid

The content ratio of the repeating unit (b1) derived from an unsaturated carboxylic acid is from 5 parts by mass to 95 parts by mass with respect to 100 parts by mass in total of the repeating units contained in the polymer (B). The lower limit of the content ratio of the repeating unit (b1) is preferably 8 parts by mass, more preferably 10 parts by mass. The upper limit of the content ratio of the repeating unit (b1) is preferably 90 parts by mass, more preferably 80 parts by mass. When the polymer (B) contains the repeating unit (b1) within the above-mentioned ranges, the dispersibility of an active material or a filler becomes satisfactory. Affinity for a silicon material serving as the active material is improved to suppress swelling of the silicon material, and hence a satisfactory charge-discharge durability characteristic is shown.

Examples of the unsaturated carboxylic acid may include the same compounds as the compounds given as examples in the description of the repeating unit (a4). Of those, one or more kinds selected from acrylic acid, methacrylic acid, and itaconic acid are preferably used.

1.2.1.2. Repeating Unit (b2) derived from (Meth)acrylamide

The content ratio of the repeating unit (b2) derived from (meth)acrylamide is from 5 parts by mass to 95 parts by mass with respect to 100 parts by mass in total of the repeating units contained in the polymer (B). The lower limit of the content ratio of the repeating unit (b2) is preferably 8 parts by mass, more preferably 10 parts by mass. The upper limit of the content ratio of the repeating unit (b2) is preferably 90 parts by mass, more preferably 80 parts by mass. When the polymer (B) contains the repeating unit (b2) within the above-mentioned ranges, the dispersibility of an active material or a filler becomes satisfactory. In addition, the flexibility of an active material layer to be obtained becomes moderate, and hence adhesiveness between a current collector and the active material layer becomes satisfactory. Further, a binding ability between active materials containing a carbon material like graphite and a silicon material can be enhanced, and hence an active material layer more excellent in flexibility and adhesiveness to a current collector is obtained.

Examples of the (meth)acrylamide may include the same compounds as the compounds given as examples in the description of the repeating unit (a5). Of those, one or more kinds selected from acrylamide and methacrylamide are preferably used.

1.2.1.3. Other Repeating Units

The polymer (B) may contain, in addition to the repeating units (b1) and (b2), a repeating unit derived from another monomer copolymerizable therewith. Examples of such repeating unit include: a repeating unit (b3) derived from a conjugated diene compound (hereinafter sometimes referred to simply as "repeating unit (b3)"); a repeating unit (b4) derived from an $\alpha,\beta$-unsaturated nitrile compound (hereinafter sometimes referred to simply as "repeating unit (b4)"); a repeating unit (b5) derived from an aromatic vinyl compound (hereinafter sometimes referred to simply as "repeating unit (b5)"); a repeating unit (b6) derived from an unsaturated carboxylic acid ester (hereinafter sometimes referred to simply as "repeating unit (b6)"); a repeating unit (b7) derived from a compound having a sulfonic acid group (hereinafter sometimes referred to simply as "repeating unit (b7)"); and a repeating unit derived from a cationic monomer.

<Repeating Unit (b3) derived from Conjugated Diene Compound>

When the polymer (B) contains the repeating unit (b3) derived from a conjugated diene compound, the content ratio of the repeating unit (b3) is preferably from 0 parts by mass to 10 parts by mass with respect to 100 parts by mass in total of the repeating units contained in the polymer (B). The lower limit of the content ratio of the repeating unit (b3) is preferably 0.5 part by mass, more preferably 1 part by mass. The upper limit of the content ratio of the repeating unit (b3) is preferably 9 parts by mass, more preferably 8 parts by mass. When the polymer (B) contains the repeating unit (b3) within the above-mentioned ranges, the dispersibility of an active material or a filler becomes satisfactory to enable the production of a uniform active material layer or protective film, and hence a structural defect of an electrode plate is eliminated, with the result that a satisfactory charge-discharge characteristic is shown in some cases. In addition, stretching and shrinking properties can be imparted to the polymer (B) covering the surface of the active material, and adhesiveness can be improved by virtue of stretching and shrinking of the polymer (B), with the result that a satisfactory charge-discharge durability characteristic is shown in some cases.

The conjugated diene compound is not particularly limited, but examples thereof may include the same compounds as the compounds given as examples in the description of the repeating unit (a1). Of those, 1,3-butadiene is particularly preferred.

<Repeating Unit (b4) derived from $\alpha,\beta$-Unsaturated Nitrile Compound>

When the polymer (B) contains the repeating unit (b4) derived from an $\alpha,\beta$-unsaturated nitrile compound, the content ratio of the repeating unit (b4) is preferably from 0 parts by mass to 10 parts by mass with respect to 100 parts by mass in total of the repeating units contained in the polymer (B). The lower limit of the content ratio of the repeating unit (b4) is preferably 0.5 part by mass, more preferably 1 part by mass. The upper limit of the content ratio of the repeating unit (b4) is preferably 9 parts by mass, more preferably 8 parts by mass. When the polymer (B) contains the repeating unit (b4) within the above-mentioned ranges, the dissolution of the polymer (B) in an electrolytic solution can be reduced, and hence a decrease in adhesiveness due to the electrolytic solution can be suppressed in some cases. In addition, an increase in internal resistance caused by a dissolved polymer component serving as an electrical resistance component in an electrical storage device can be suppressed in some cases.

The $\alpha,\beta$-unsaturated nitrile compound is not particularly limited, but examples thereof may include the same compounds as the compounds given as examples in the description of the repeating unit (a2). Of those, one or more kinds selected from the group consisting of: acrylonitrile; and methacrylonitrile are preferred, and acrylonitrile is particularly preferred.

<Repeating Unit (b5) derived from Aromatic Vinyl Compound>

When the polymer (B) contains the repeating unit (b5) derived from an aromatic vinyl compound, the content ratio of the repeating unit (b5) is preferably from 0 parts by mass to 10 parts by mass with respect to 100 parts by mass in total of the repeating units contained in the polymer (B). The lower limit of the content ratio of the repeating unit (b5) is preferably 0.5 part by mass, more preferably 1 part by mass. The upper limit of the content ratio of the repeating unit (b5) is preferably 9 parts by mass, more preferably 8 parts by mass. When the polymer (B) contains the repeating unit (b5) within the above-mentioned ranges, the polymer (B) has a moderate binding force for graphite used as an active material, and hence an electrical storage device electrode excellent in flexibility and adhesiveness is obtained in some cases.

The aromatic vinyl compound is not particularly limited, but examples thereof may include the same compounds as the compounds given as examples in the description of the repeating unit (a3). Of those, one or more kinds selected from the group consisting of: styrene; and divinylbenzene are preferred, and styrene is particularly preferred.

<Repeating Unit (b6) derived from Unsaturated Carboxylic Acid Ester>

When the polymer (B) contains the repeating unit (b6) derived from an unsaturated carboxylic acid ester, the content ratio of the repeating unit (b6) is preferably from 0 parts by mass to 30 parts by mass with respect to 100 parts by mass in total of the repeating units contained in the polymer (B). The lower limit of the content ratio of the repeating unit (b6) is preferably 1 part by mass, more preferably 5 parts by mass. The upper limit of the content ratio of the repeating unit (b6) is preferably 25 parts by mass, more preferably 20 parts by mass. When the polymer (B) contains the repeating unit (b6) within the above-mentioned ranges, affinity between the polymer (B) and an electrolytic solution becomes satisfactory, and hence an increase in internal resistance caused by the binder serving as an electrical resistance component in an electrical storage device can be suppressed, and besides, a decrease in adhesiveness due to excessive absorption of the electrolytic solution can be prevented in some cases.

Of the unsaturated carboxylic acid esters, a (meth)acrylic acid ester may be preferably used. Specific examples of the (meth)acrylic acid ester may include, but not particularly limited to, the same compounds as the compounds given as examples in the description of the repeating unit (a6).

<Repeating Unit (b7) derived from Compound having Sulfonic Acid Group>

When the polymer (B) contains the repeating unit (b7) derived from a compound having a sulfonic acid group, the content ratio of the repeating unit (b7) is preferably from 0 parts by mass to 30 parts by mass with respect to 100 parts by mass in total of the repeating units contained in the polymer (B). The lower limit of the content ratio of the repeating unit (b7) is preferably 1 part by mass, more preferably 5 parts by mass. The upper limit of the content ratio of the repeating unit (b7) is preferably 25 parts by mass, more preferably 20 parts by mass.

The compound having a sulfonic acid group is not particularly limited, but examples thereof may include the same compounds as the compounds given as examples in the description of the repeating unit (a7).

<Repeating Unit derived from Cationic Monomer>

The polymer (B) may contain a repeating unit derived from a cationic monomer. The cationic monomer is not particularly limited, but is preferably at least one kind of monomer selected from the group consisting of: a secondary amine (salt); a tertiary amine (salt); and a quaternary ammonium salt. The cationic monomer is not particularly limited, but examples thereof may include the same compounds as above.

1.2.2.1. Solubility in Water

The polymer (B) is a water-soluble polymer. When the polymer (B) is a water-soluble polymer, the surface of an active material can be easily coated with the polymer (B). As a result, the expansion of the active material at the time of charge and discharge can be suppressed, and hence an electrical storage device showing a satisfactory charge-discharge durability characteristic can be easily obtained. The term "water-soluble polymer" as used in the invention refers to a polymer having a solubility in water at 25°C and 1 atm of 1 g or more with respect to 100 g of water.

1.2.2.2. Endothermic Characteristic

The polymer (B) more preferably has an endothermic peak within the range of from -20°C to 150°C when subjected to measurement by differential scanning calorimetry (DSC) in conformity to JIS K7121. A case in which the polymer (B) has only one endothermic peak in DSC analysis, and in which the peak temperature falls within the above-mentioned range is preferred because the polymer (B) shows satisfactory adhesiveness, and besides, can impart more satisfactory flexibility and a more satisfactory pressure-sensitive adhesive property to the active material layer.

1.2.2.3. Viscosity

When an aqueous solution of the polymer (B) having a solid content concentration of 5% and a pH of 9 is measured for its viscosity at a temperature of 25°C using a B-type viscometer, the viscosity is preferably from 5 mPa·s/30 rpm to 200,000 mPa·s/30 rpm, more preferably from 500 mPa·s/30 rpm to 150,000 mPa·s/30 rpm, particularly preferably from 1,000 mPa·s/30 rpm to 100,000 mPa·s/30 rpm. The viscosity measurement may be performed in conformity to JIS Z 8803. For example, "RB-80L" or "TVB-10" manufactured by Toki Sangyo Co., Ltd. may be used as the B-type viscometer.

1.2.2.4. Weight Average Molecular Weight (Mw)

The weight average molecular weight (Mw) of the polymer (B) is preferably 5,000 or more and 2,000,000 or less, more preferably 10,000 or more and 1,800,000 or less, particularly preferably 50,000 or more and 1,500,000 or less. When the weight average molecular weight (Mn) of the polymer (B) falls within the above-mentioned ranges, the adhesiveness becomes satisfactory, and hence an electrical storage device excellent in charge-discharge characteristic can be easily obtained. The weight average molecular weight of the polymer (B) may be measured using, for example, a GPC method under the following conditions.

(Measurement Conditions)

·Measuring equipment: GPC (model number: HLC-8220) manufactured by Tosoh Corporation
·Columns: TSKgel guardcolumn $PW_{XL}$ (manufactured by Tosoh Corporation), TSK-GEL $G2500PW_{XL}$ (manufactured by Tosoh Corporation), and TSK-GEL $GMPW_{XL}$

(manufactured by Tosoh Corporation)

·Eluent: 0.1 M $NaNO_3$ aqueous solution
·Calibration curve: standard polyethylene oxide
·Measurement method: The polymer (B) is dissolved in the eluent so as to have a solid content of 0.3 wt%, and the solution is filtered through a filter, followed by measurement.

1.2.3. Synthesis Method for Polymer (B)

The synthesis method for the polymer (B) is not particularly limited, but is preferably solution polymerization to be performed in a solvent containing water as a main component in the presence of a known chain transfer agent, polymerization initiator, and the like. A particularly preferred mode of polymerization is aqueous solution polymerization. In addition, emulsion polymerization to be performed in the presence polymerization. In addition, emulsion polymerization to be performed in the presence of a known emulsifier (surfactant), chain transfer agent, polymerization initiator, and the like is also preferred.

The chain transfer agent to be used in the solution polymerization of the polymer (B) is preferably a water-soluble chain transfer agent, and examples thereof include hypophosphorous acid salts, phosphorous acids, thiols, secondary alcohols, and amines. In particular, thiols, such as mercaptoacetic acid, 2-mercaptosuccinic acid, 3-mercaptopropionic acid, and 3-mercapto-1,2-propanediol, are preferred. Those water-soluble chain transfer agents may be used alone or in combination thereof. The use amount of the chain transfer agent is preferably 5.0 parts by mass or less with respect to 100 parts by mass of the total mass of the monomers to be used for the polymerization.

The polymerization initiator to be used in the solution polymerization of the polymer (B) is preferably a water-soluble radical initiator, particularly preferably a persulfuric acid salt, such as lithium persulfate, potassium persulfate, sodium persulfate, or ammonium persulfate, or a water-soluble azo-based initiator, such as 4,4'-azobis(4-cyanovaleric acid). The use amount of the polymerization initiator is preferably from 0.1 part by mass to 5.0 parts by mass with respect to 100 parts by mass of the total mass of the monomers to be used for the polymerization.

A polymerization temperature at the time of the synthesis of the polymer (B) is not particularly limited, but in consideration of, for example, a production time and the conversion rate (reaction ratio) of the monomers into a copolymer, the synthesis is performed within the range of preferably from 30°C to 95°C, more preferably from 50°C to 85°C. In addition, a pH adjusting agent, EDTA or a salt thereof, which serves as a sequestrant, or the like may also be used at the time of the polymerization for the purpose of improving production stability.

In addition, before the polymerization or after the polymerization, pH adjustment may be performed with a general neutralizer, such as ammonia, an organic amine, potassium hydroxide, sodium hydroxide, or lithium hydroxide, and in that case, the pH is preferably adjusted to fall within the range of from 5 to 11. EDTA or a salt thereof, which serves as a sequestrant, or the like may also be used.

In addition, in the case of adopting emulsion polymerization for the polymer (B), the polymerization may be performed by, for example, an emulsion polymerization method to be performed in the presence of a known emulsifier (surfactant), chain transfer agent, polymerization initiator, and the like. Examples of the known emulsifier, chain transfer agent, and polymerization initiator may include compounds described in JP 5999399 B2.

The solution polymerization or emulsion polymerization method for synthesizing the polymer (B) may be performed by one-stage polymerization, or may be performed by multistage polymerization involving two or more stages.

When the synthesis of the polymer (B) is performed by one-stage polymerization, a mixture of the above-mentioned monomers may be subjected to emulsion polymerization in the presence of an appropriate emulsifier, chain transfer agent, polymerization initiator, and the like at preferably from 40°C to 80°C for preferably from 1 hour to 18 hours.

When the synthesis of the polymer (B) is performed by two-stage polymerization, the polymerization of each stage is preferably set as described below.

The use ratio of monomers to be used in the first stage polymerization is set to fall within preferably the range of from 40 mass% to 100 mass%, more preferably the range of from 45 mass% to 100 mass% with respect to the total mass of monomers (sum of the mass of the monomers to be used in the first stage polymerization and the mass of monomers to be used in the second stage polymerization). When the first stage polymerization is performed using the monomers in such amounts, a polymer (B) that is excellent in dispersion stability and has a high binding force can be obtained.

The kinds and use ratio of the monomers to be used in the first stage polymerization and the kinds and use ratio of the monomers to be used in the second stage polymerization may be the same as or different from each other.

When a total solid content concentration in the solution polymerization or the emulsion polymerization is set to 30 mass% or less, the polymerization reaction can be allowed to proceed under a state in which the dispersion stability of the polymer to be obtained is satisfactory. The total solid content concentration is preferably 25 mass% or less, more preferably 20 mass% or less.

Irrespective of whether the synthesis of the polymer (B) is performed by one-stage polymerization or two-stage polymerization, after the completion of the emulsion polymerization, a neutralizer is preferably added to the polymerization mixture to adjust its pH to from about 3 to about 11, preferably from 4 to 10.5, more preferably from 5 to 10. The neutralizer to be used in this case is not particularly limited, but examples thereof may include: metal hydroxides, such as sodium hydroxide and potassium hydroxide; and ammonia. When the pH is set to fall within the above-mentioned ranges, the stability of the polymer (B) becomes satisfactory. When the polymerization mixture is subjected to neutralization treatment before being concentrated, its solid content concentration can be increased while satisfactory stability of the polymer (B) is maintained.

1.3. Liquid Medium (C)

The composition for an electrical storage device according to this embodiment contains the liquid medium (C). The liquid medium (C) is preferably an aqueous medium containing water, and is more preferably water. The aqueous medium may contain a non-aqueous medium other than water. Examples of such non-aqueous medium may include an amide compound, a hydrocarbon, an alcohol, a ketone, an ester, an amine compound, a lactone, a sulfoxide, and a sulfone compound, and one or more kinds selected therefrom may be used. When the composition for an electrical storage device according to this embodiment uses the aqueous medium as the liquid medium (C), the composition adversely affects an environment to a less degree and is highly safe for a worker who handles the composition.

The content ratio of the non-aqueous medium in the aqueous medium is preferably 10 parts by mass or less, more preferably 5 parts by mass or less in 100 parts by mass of the aqueous medium. It is particularly preferred that the aqueous medium be substantially free of the non-aqueous medium. Herein, the phrase "be substantially free" merely means that the non-aqueous medium is not intentionally added as the liquid medium, and the aqueous medium may contain the non-aqueous medium that is inevitably mixed during the production of the composition for an electrical storage device.

1.4. Other Additives

The composition for an electrical storage device according to this embodiment may contain an additive other than the above-mentioned components as required. Examples of such additive include a polymer other than the polymer particles (A) and the polymer (B), a preservative, and a thickener.

<Preservative>

The composition for an electrical storage device according to this embodiment may contain a preservative. The incorporation of the preservative can suppress the generation of foreign matter due to the growth of bacteria, mold, or the like during the storage of the composition for an electrical storage device in some cases. Examples of the preservative include compounds described in JP 5999399 B2.

<Thickener>

The composition for an electrical storage device according to this embodiment may contain a thickener. The incorporation of the thickener can further improve the coating property of the composition, the charge-discharge characteristic of an electrical storage device to be obtained, and the like in some cases.

Examples of such thickener include: cellulose compounds, such as carboxymethyl cellulose, methyl cellulose, and hydroxypropyl cellulose; ammonium salts or alkali metal salts of the cellulose compound; polyvinyl alcohol-based (co) polymers, such as polyvinyl alcohol, modified polyvinyl alcohol, and an ethylenevinyl alcohol copolymer; and water-soluble polymers, such as saponified products of copolymers of unsaturated carboxylic acids, such as (meth)acrylic acid, maleic acid, and fumaric acid, and vinyl esters. Of those, an alkali metal salt of carboxymethyl cellulose or an alkali metal salt of poly(meth)acrylic acid is particularly preferred as the thickener.

As commercially available products of those thickeners, there may be given, for example, alkali metal salts of carboxymethyl cellulose, such as CMC 1120, CMC 1150, CMC 2200, CMC 2280, and CMC 2450 (all of which are manufactured by Daicel Corporation).

When the composition for an electrical storage device according to this embodiment contains the thickener, the content ratio of the thickener is preferably 5 parts by mass or less, more preferably from 0.1 part by mass to 3 parts by mass with respect to 100 parts by mass of the total solid content of the composition for an electrical storage device.

1.5. Physical Properties of Composition for Electrical Storage Device 1.5.1. Mass Ratio between Polymer Particles (A) and Polymer (B)

The composition for an electrical storage device according to this embodiment preferably has a value for Mb/Ma of from 0.25 to 99, where Ma represents the content of the polymer particles (A) in parts by mass, and Mb represents the content of the polymer (B) in parts by mass. The lower limit of the value for Mb/Ma is preferably 0.25, more preferably 0.5, particularly preferably 1. The upper limit of the value for Mb/Ma is preferably 99, more preferably 95, particularly preferably 90. When the mass ratio between the polymer particles (A) and the polymer (B) in the composition for an electrical storage device falls within the above-mentioned ranges, the polymer particles (A) exist like crosslinking points of the polymer (B), and hence it is likely easy for the polymer (B) to coat an active material around the polymer particles (A). Conceivably as a result of this, there is obtained an electrical storage device electrode that not only is excellent in adhesiveness, but also shows such an extremely satisfactory charge-discharge durability characteristic that the expansion of the active material can be suppressed.

1.5.2. Viscosity

When the composition for an electrical storage device according to this embodiment at a solid content concentration of 5% and a pH of 9 is measured for its viscosity at a temperature of 25°C using a B-type viscometer, the viscosity is preferably from 5 mPa·s/30 rpm to 150,000 mPa·s/30 rpm, more preferably from 500 mPa·s/30 rpm to 130,000 mPa·s/30 rpm, particularly preferably from 1,000 mPa·s/30 rpm to 100,000 mPa·s/30 rpm. When the viscosity of the composition for an electrical storage device falls within the above-mentioned ranges, a slurry for an electrical storage device prepared therefrom is excellent in electrode coating property. The viscosity measurement may be performed in conformity to JIS Z 8803. For example, "RB-80L" or "TVB-10" manufactured by Toki Sangyo Co., Ltd. may be used as the B-type viscometer.

1.5.3. pH

The pH of the composition for an electrical storage device according to this embodiment is preferably from 3 to 11, more preferably from 4 to 10.5, particularly preferably from 5 to 10. When the pH of the composition for an electrical storage device falls within the above-mentioned ranges, the occurrence of a problem such as lack of leveling property or liquid dripping during the application of a slurry can be suppressed to facilitate the production of an electrical storage device electrode achieving both a satisfactory electrical characteristic and satisfactory adhesiveness.

Herein, the "pH" refers to a physical property measured as described below. That is, the pH is a value measured at 25°C in conformity to JIS Z8802:2011 with a pH meter using a glass electrode calibrated with a neutral phosphate standard solution and a borate standard solution serving as pH standard solutions. Examples of such pH meter include "HM-7J" manufactured by DKK-TOA Corporation and "D-51" manufactured by Horiba, Ltd.

In a slurry produced using the composition for an electrical storage device having a pH within the above-mentioned ranges, the low pH causes the surface of an active material to be corroded to such an extent that the charge-discharge characteristic is not degraded, and hence the surface of the active material contaminated through exposure to the atmosphere can be cleaned. Conceivably as a result of this, in an active material layer to be obtained, an obstruction of the storage and release of lithium ions between the active material and an electrolytic solution can be suppressed to enable the expression of a satisfactory charge-discharge characteristic.

It is not denied that the pH of the composition for an electrical storage device is affected by the composition of the constituent monomers of the polymer particles (A) and the polymer (B), but it should be noted that the pH is not determined by the monomer composition alone. That is, it is known that the pH of a composition for an electrical storage device generally varies depending on polymerization conditions and the like even for the same monomer composition, and Examples of the present application are merely some examples thereof.

For example, even for the same monomer composition, the case of loading all the unsaturated carboxylic acid into a polymerization reaction liquid at the beginning, and then sequentially adding the other monomers, and the case of loading the monomers other than the unsaturated carboxylic acid into a polymerization reaction liquid, and finally adding the unsaturated carboxylic acid give different amounts of carboxy groups derived from the unsaturated carboxylic acid exposed on the surface of the polymer to be obtained. Thus, it is conceivable that the pH of the composition for an electrical storage device is significantly changed merely by changing the order in which the monomers are added in the polymerization method.

2. Slurry for Electrical Storage Device

A slurry for an electrical storage device according to an embodiment of the invention contains the above-mentioned composition for an electrical storage device. As described above, the composition for an electrical storage device according to this embodiment may be used as a material for forming a protective film for suppressing a short circuit due to dendrites generated along with charge and discharge, and may also be used as a material for producing an electrical storage device electrode (active material layer) improved in binding ability between active materials and adhesive ability between the active material and a current collector, and in powder fall-off resistance. For this reason, the slurry for an electrical storage device for forming a protective film (hereinafter sometimes referred to as "slurry for a protective film"), and the slurry for an electrical storage device for forming the active material layer of an electrical storage device electrode (hereinafter sometimes referred to as "slurry for an electrical storage device electrode") are separately described.

2.1. Slurry for Protective Film

Herein, the "slurry for a protective film" refers to a dispersion to be used for forming a protective film on the surface of an electrode or a separator, or the surfaces of both thereof by being applied to the surface of the electrode or the separator, or the surfaces of both thereof, and then dried. The slurry for a protective film according to this embodiment may consist only of the above-mentioned composition for an electrical storage device, or may further contain an inorganic filler. Each component contained in the slurry for a protective film according to this embodiment is described in detail below. The composition for an electrical storage device is as described above, and hence the description thereof is omitted.

2.1.1. Inorganic Filler

When the slurry for a protective film according to this embodiment contains the inorganic filler, the toughness of a protective film to be formed can be improved. As the inorganic filler, at least one kind of metal oxide particles selected from the group consisting of: silica; titanium oxide (titania); aluminum oxide (alumina); zirconium oxide (zirconia); and magnesium oxide (magnesia) are preferably used. Of those, titanium oxide and aluminum oxide are preferred from the viewpoint of further improving the toughness of the protective film. In addition, the titanium oxide is more preferably rutile-type titanium oxide.

The average particle diameter of the inorganic filler is preferably 1 $\mu$m or less, and more preferably falls within the range of from 0.1 $\mu$m to 0.8 $\mu$m. The average particle diameter of the inorganic filler is preferably larger than the average pore diameter of the separator that is a porous film. With this configuration, damage to the separator can be alleviated and the inorganic filler can be prevented from clogging the fine pores of the separator.

The slurry for a protective film according to this embodiment contains preferably 0.1 part by mass to 20 parts by mass, more preferably 1 part by mass to 10 parts by mass of the above-mentioned composition for an electrical storage device in terms of solid content with respect to 100 parts by mass of the inorganic filler. When the content ratio of the composition for an electrical storage device falls within the above-mentioned ranges, the protective film to be formed strikes a satisfactory balance between toughness and lithium ion permeability, and as a result, the resistance increase rate of an electrical storage device to be obtained can be further reduced.

2.1.2. Liquid Medium

In the slurry for a protective film according to this embodiment, the materials described in the "1.3. Liquid Medium (C)" section for the above-mentioned composition for an electrical storage device may be used as required. The addition amount of the liquid medium may be adjusted as required so that the optimal slurry viscosity may be obtained in accordance with, for example, a coating method.

2.1.3. Other Additives

In the slurry for a protective film according to this embodiment, the materials described in the "1.4. Other Additives" section of the above-mentioned composition for an electrical storage device may be used in appropriate amounts as required.

2.2. Slurry for Electrical Storage Device Electrode

Herein, the "slurry for an electrical storage device electrode" refers to a dispersion to be used for forming an active material layer on the surface of a current collector by being applied to the surface of the current collector and then dried. The slurry for an electrical storage device electrode according to this embodiment contains the above-mentioned composition for an electrical storage device, and an active material. The components contained in the slurry for an electrical storage device electrode according to this embodiment are described below. The composition for an electrical storage device is as described above, and hence the description thereof is omitted.

2.2.1. Active Material

Examples of the active material to be used for the slurry for an electrical storage device electrode according to this embodiment include: conductive polymers, such as a carbon material, a silicon material, an oxide containing a lithium atom, a lead compound, a tin compound, an arsenic compound, an antimony compound, an aluminum compound, and polyacene; composite metal oxides each represented by $A_XB_YO_Z$ (where A represents an alkali metal or a transition metal, B represents at least one kind selected from transition metals, such as cobalt, nickel, aluminum, tin, and manganese, O represents an oxygen atom, and X, Y, and Z represent numbers in the ranges of 1.10>X>0.05, 4.00>Y>0.85, and 5.00>Z>1.5); and other metal oxides. Specific examples thereof include compounds described in JP 5999399 B2.

The slurry for an electrical storage device electrode according to this embodiment may be used in the production of any one of electrical storage device electrodes including a positive electrode and a negative electrode, and is preferably used for both the positive electrode and the negative electrode.

When lithium iron phosphate, which is a kind of olivine-type lithium-containing phosphoric acid compound, is used as a positive electrode active material in the case of producing a positive electrode, there has been a problem in that the charge-discharge characteristic is not sufficient and the adhesiveness is poor. It is known that lithium iron phosphate has fine primary particle diameters, and is a secondary aggregate thereof. One conceivable cause of the problem is as follows: the aggregation collapses in the active material layer during repeated charge and discharge to cause separation between the active materials, with the result that peeling from a current collector, or disruption of a conductive network in the active material layer is liable to occur.

However, an electrical storage device electrode produced using the slurry for an electrical storage device electrode according to this embodiment can show a satisfactory electrical characteristic without the occurrence of such problem as described above even in the case of using lithium iron phosphate as a positive electrode active material. A conceivable reason therefor is that the polymer particles (A) can firmly bind lithium iron phosphate, and at the same time, the state of firmly binding lithium iron phosphate can be maintained by the polymer (B) even during charge and discharge.

Meanwhile, when the negative electrode is produced, the slurry preferably contains the silicon material among the active materials given as examples above. The silicon material has a large lithium storage capacity per unit weight as compared to other active materials, and hence the incorporation of the silicon material as the negative electrode active material can increase the electrical storage capacity of an electrical storage device. As a result, the output and energy density of the electrical storage device can be increased.

In addition, the negative electrode active material is more preferably a mixture of the silicon material and the carbon material. The carbon material undergoes a smaller volume change along with charge and discharge than the silicon material, and hence, through use of the mixture of the silicon material and the carbon material as the negative electrode active material, the influence of the volume change of the silicon material can be alleviated. Accordingly, the adhesive ability between the active material layer and a current collector can be further improved.

When silicon (Si) is used as the active material, silicon causes a large volume change when storing lithium, though having a high capacity. Accordingly, the silicon material has a property of being finely powdered through repeated expansion and contraction to cause peeling from a current collector, or separation between the active materials, with the result that disruption of a conductive network in the active material layer is liable to occur. Consequently, the charge-discharge durability characteristic is extremely degraded within a short period of time.

However, an electrical storage device electrode produced using the slurry for an electrical storage device electrode according to this embodiment can show a satisfactory electrical characteristic without the occurrence of such problem as described above even in the case of using the silicon material. A conceivable reason therefor is that the polymer particles (A) can firmly bind the silicon material, and at the same time, even when the silicon material expands in volume by storing lithium, the state of firmly binding the silicon material can be maintained by the polymer (B).

The active material preferably has a particulate shape. The average particle diameter of the active material is preferably from 0.1 $\mu$m to 100 $\mu$m, more preferably from 1 $\mu$m to 20 $\mu$m. Herein, the average particle diameter of the active material refers to a volume average particle diameter calculated from a particle size distribution, the particle size distribution being measured with a particle size distribution-measuring apparatus employing a laser diffraction method as its measurement principle. Examples of such laser diffraction particle size distribution-measuring apparatus include the HORIBA LA-300 series and the HORIBA LA-920 series (which are manufactured by Horiba, Ltd.).

2.2.2. Other Additives

In addition to the above-mentioned components, other components may be added to the slurry for an electrical storage device electrode according to this embodiment as required. Examples of such component include a polymer other than the polymer particles (A) and the polymer (B), a conductivity-imparting agent, a thickener, a liquid medium (excluding the liquid medium included in the composition for an electrical storage device), a pH adjusting agent, and a corrosion inhibitor.

<Conductivity-imparting Agent>

A conductivity-imparting agent may be added to the slurry for an electrical storage device electrode according to this embodiment for the purposes of imparting conductivity and buffering the volume change of the active material caused by the entrance and exit of lithium ions.

Specific examples of the conductivity-imparting agent include carbons, such as activated carbon, acetylene black, ketjen black, furnace black, black lead, a carbon fiber, and a fullerene. Of those, acetylene black or furnace black may be preferably used. The content ratio of the conductivity-imparting agent is preferably 20 parts by mass or less, more preferably from 1 part by mass to 15 parts by mass, particularly preferably from 2 parts by mass to 10 parts by mass with respect to 100 parts by mass of the active material.

<Thickener>

A thickener may be added to the slurry for an electrical storage device electrode according to this embodiment for the purpose of improving its coating property. Specific examples of the thickener may include the compounds described in the "1.4. Other Additives" section. The content ratio of the thickener is preferably from 0.1 part by mass to 10 parts by mass, more preferably from 0.5 part by mass to 5 parts by mass with respect to 100 parts by mass of the active material.

<Liquid Medium>

The slurry for an electrical storage device electrode according to this embodiment contains the above-mentioned composition for an electrical storage device, and hence contains the liquid medium (C) included in the composition for an electrical storage device. In addition to the liquid medium (C) included in the composition for an electrical storage device, a liquid medium other than the liquid medium (C) may be further added as required to the slurry for an electrical storage device electrode according to this embodiment.

The liquid medium that may be additionally added to the slurry for an electrical storage device electrode according to this embodiment may be of the same kind as or different from the liquid medium (C) included in the composition for an electrical storage device, but is preferably selected and used from the liquid media given as examples in the "1.3. Liquid Medium (C)" section.

The use ratio of the liquid medium (including the liquid medium included in the composition for an electrical storage device) in the slurry for an electrical storage device electrode according to this embodiment is set to such a ratio that the solid content concentration in the slurry (which refers to the ratio of the total mass of the components other than the liquid medium in the slurry to the total mass of the slurry. The same applies hereinafter.) becomes preferably from 30 mass% to 70 mass%, more preferably from 40 mass% to 60 mass%.

<pH Adjusting Agent/Corrosion Inhibitor>

A pH adjusting agent or a corrosion inhibitor may be added to the slurry for an electrical storage device electrode according to this embodiment for the purpose of suppressing the corrosion of a current collector depending on the kind of the active material.

Examples of the pH adjusting agent may include hydrochloric acid, phosphoric acid, sulfuric acid, acetic acid, formic acid, ammonium phosphate, ammonium sulfate, ammonium acetate, ammonium formate, ammonium chloride, sodium hydroxide, and potassium hydroxide. Of those, sulfuric acid, ammonium sulfate, sodium hydroxide, and potassium hydroxide are preferred. In addition, a pH adjusting agent selected from the neutralizers described in the synthesis method for the polymer particles (A) or the polymer (B) may also be used.

Examples of the corrosion inhibitor include ammonium metavanadate, sodium metavanadate, potassium metavanadate, ammonium metatungstate, sodium metatungstate, potassium metatungstate, ammonium paratungstate, sodium paratungstate, potassium paratungstate, ammonium molybdate, sodium molybdate, and potassium molybdate. Of those, ammonium paratungstate, ammonium metavanadate, sodium metavanadate, potassium metavanadate, and ammonium molybdate are preferred.

2.2.3. Production Method for Slurry for Electrical Storage Device Electrode

The slurry for an electrical storage device electrode according to this embodiment may be a slurry produced by any method as long as the slurry contains the above-mentioned composition for an electrical storage device and an active material, and the slurry may be produced by, for example, a method described in JP 5999399 B2 or the like.

3. Electrical Storage Device Electrode

An electrical storage device electrode according to an embodiment of the invention includes a current collector and an active material layer formed on the surface of the current collector by applying and drying the above-mentioned slurry for an electrical storage device electrode. Such electrical storage device electrode may be produced by applying the above-mentioned slurry for an electrical storage device electrode to the surface of the current collector, such as a metal foil, to form a coating film, and then drying the coating film to form the active material layer. The thus produced electrical storage device electrode has the active material layer, containing the above-mentioned polymer particles (A), polymer (B), and active material, and optional components added as required, bound onto the current collector, and hence is excellent in adhesiveness, and besides, shows a satisfactory charge-discharge durability characteristic.

The current collector is not particularly limited as long as the current collector is formed of a conductive material, but an example thereof is a current collector described in JP 5999399 B2 or the like.

A method of applying the slurry for an electrical storage device electrode to the current collector is not particularly limited either, and the slurry may be applied by, for example, a method described in JP 5999399 B2 or the like.

When a silicon material is used as the active material in the electrical storage device electrode according to this embodiment, the content ratio of a silicon element in 100 parts by mass of the active material layer is preferably from 2 parts by mass to 40 parts by mass, more preferably from 2 parts by mass to 30 parts by mass, particularly preferably from 3 parts by mass to 20 parts by mass. When the content of the silicon element in the active material layer falls within the above-mentioned ranges, the electrical storage capacity of an electrical storage device produced through use thereof is improved, and besides, an active material layer in which the distribution of the silicon element is uniform is obtained.

In the invention, the content of the silicon element in the active material layer may be measured by, for example, a method described in JP 5999399 B2 or the like.

4. Electrical Storage Device

An electrical storage device according to an embodiment of the invention includes the above-mentioned electrical storage device electrode and further contains an electrolytic solution, and may be produced in accordance with a conventional method using parts such as a separator. A specific example of the production method may be a method involving: stacking together a negative electrode and a positive electrode via a separator; accommodating the stack in a battery container in a state of, for example, being wound or folded in accordance with a battery shape; injecting an electrolytic solution into the battery container; and sealing the battery container. The shape of the battery may be an appropriate shape, for example, a coin shape, a cylindrical shape, a square shape, or a laminate shape.

The electrolytic solution may be a liquid or a gel, and an electrolytic solution effectively expressing a function as a battery may be selected from known electrolytic solutions to be used for electrical storage devices depending on the kind of the active material. The electrolytic solution may be a solution obtained by dissolving an electrolyte in an appropriate solvent. Examples of those electrolytes and solvents include compounds described in JP 5999399 B2.

The above-mentioned electrical storage device may be applied to, for example, a lithium ion secondary battery, an electric double layer capacitor, and a lithium ion capacitor each of which needs to be discharged at a high current density. Of those, a lithium ion secondary battery is particularly preferred. In the electrical storage device electrode and the electrical storage device according to the above-mentioned embodiments, known members for lithium ion secondary batteries, for electric double layer capacitors, and for lithium ion capacitors may be used as members other than the composition for an electrical storage device.

5. Examples

The invention is specifically described below by way of Examples, but the invention is by no means limited to these Examples. The terms "part(s)" and "%" in Examples and Comparative Examples are by mass, unless otherwise stated.

5.1. Synthesis of Polymer (A)

<Synthesis Example of Polymer (A1)>

A reaction vessel was loaded with 400 parts by mass of water, a monomer mixture formed of 45 parts by mass of 1,3-butadiene, 25 parts by mass of acrylonitrile, 5 parts by mass of styrene, 5 parts by mass of acrylic acid, 15 parts by mass of methacrylic acid, and 5 parts by mass of acrylamide, 0.1 part by mass of tert-dodecyl mercaptan serving as a chain transfer agent, 1 part by mass of a sodium alkyl diphenyl ether disulfonate serving as an emulsifier, and 0.2 part by mass of potassium persulfate serving as a polymerization initiator, and polymerization was performed under stirring at 70°C for 24 hours. At this time, the reaction was ended at a polymerization conversion rate of 98%. Unreacted monomers were removed from the thus obtained dispersion of a polymer (A1), and the remainder was concentrated, followed by addition of a 10% aqueous sodium hydroxide solution and water to provide a polymer dispersion containing 5 mass% of the particles of the polymer (A1) and having a pH of 9.0.

<Synthesis Examples of Polymer (A2) to Polymer (A12)>

Respective polymer dispersions were obtained by synthesizing polymers (A2) to (A12) in the same manner as in the synthesis example of the polymer (A1) except that the kinds and content ratios of the monomers used were changed as shown in Table 1 below.

<Measurement of Number Average Particle Diameter>

The particle size distribution of each of the polymers (A1) to (A12) obtained above was measured with a particle size distribution-measuring apparatus employing a dynamic light scattering method as its measurement principle (manufactured by Otsuka Electronics Co., Ltd., model: "FPAR-1000"), and a number average particle diameter was determined from the particle size distribution. Measurement conditions are as described below. The measurement results are shown together in Table 1 below.

(Measurement Conditions)

·Dispersion medium: water
·Measurement temperature: 25°C
·Dilution factor: 0.1 wt%
·Scattering angle: 160°
·Light source laser wavelength: 632.8 nm

<Viscosity Measurement>

The polymer dispersions obtained above were each measured for its viscosity at a temperature of 25°C in conformity to JIS Z 8803. A viscometer used was a B-type viscometer (manufactured by Toki Sangyo Co., Ltd., model: "RB-80L"). The measurement results are shown together in Table 1 below.

<Measurement of Weight Average Molecular Weight of THF-soluble Components>

10 mg of each polymer dispersion obtained above was mixed with 5 mL of THF, and the mixture was left to stand at 25°C for 16 hours and then passed through a 0.45 $\mu$m membrane filter to produce a sample for measurement. Then, under the following measurement conditions, the resultant sample for measurement was used to determine the weight average molecular weight (Mw) of the THF-soluble components in terms of polystyrene (RI detection) by gel permeation chromatography using the following column. The measurement results are shown in Table 1 below.

(Measurement Conditions)

·Temperature: 35°C
·Solvent: THF
·Flow rate: 1.0 mL/min
·Concentration: 0.2 wt%
·Measurement sample injection volume: 100 $\mu$L

(Column)

·"GPC TSKgel $\alpha$-2500" manufactured by Tosoh Corporation (30 cm×2) was used. (Measurement was performed under the condition that a linear correlation equation between $Log_{10}(Mw)$ and elution time was 0.98 or more between an Mw of 1,000 and an Mw of 20,000,000.)

Table 1

| Classification | Monomer name | A1 | A2 | A3 | A4 | A5 | A6 | A7 | A8 | A9 | A10 | A11 | A12 |
|---|---|---|---|---|---|---|---|---|---|---|---|---|---|
| (a1) Conjugated diene compound | BD | 45 | 35 | 65 | 20 | 55 | 50 | 25 | 20 | 15 | 70 | 40 | 45 |
| (a2) α,β-Unsaturated nitrile compound | AN | 25 | 3 | 30 | 10 | 1 | 40 | 5 | 30 | 35 | 20 | | 45 |
| (a3) Aromatic vinyl compound | ST | 5 | 50 | | 10 | 5 | | 30 | | 15 | | 30 | |
| | DVB | | | 4 | | | | | | | | 5 | |
| (a4) Unsaturated carboxylic acid | TA | | | | 10 | 15 | 2 | | | | 5 | | |
| | AA | 5 | 3 | 1 | 20 | | | 5 | 30 | 35 | | 5 | 5 |
| | MAA | 15 | | | 10 | 20 | 3 | | | | 5 | 5 | |
| (a5) (Meth)acrylamide | AAM | 5 | | | | | | | 10 | | | | 5 |
| | MAM | | | | 5 | | | | | | | | |
| (a6) Unsaturated carboxylic acid ester | MMA | | 6 | | 10 | | 1 | 30 | | | | | |
| | BA | | | | | | 1 | | | | | | |
| | 2EHA | | | | | | 1 | | | | | | |
| | CHMA | | | | | | 1 | | | | | 5 | |
| | EDMA | | | | | 4 | 1 | | | | | 5 | |
| | HEMA | | 3 | | | | | | | | | 5 | |
| | HEA | | | | 5 | | | | | | | | |
| (a7) Compound having sulfonic acid group | NASS | | | | | | | 5 | 10 | | | | |
| Total (parts by mass) | | 100 | 100 | 100 | 100 | 100 | 100 | 100 | 100 | 100 | 100 | 100 | 100 |
| Number of parts in composition | (a1) Conjugated diene compound | 45 | 35 | 65 | 20 | 55 | 50 | 25 | 20 | 15 | 70 | 40 | 45 |
| | (a2) α,β-Unsaturated nitrile compound | 25 | 3 | 30 | 10 | 1 | 40 | 5 | 30 | 35 | 20 | 0 | 45 |
| | (a4) Unsaturated carboxylic acid | 20 | 3 | 1 | 40 | 35 | 5 | 5 | 30 | 35 | 10 | 10 | 5 |

(continued)

| Classification | | Monomer name | A1 | A2 | A3 | A4 | A5 | A6 | A7 | A8 | A9 | A10 | A11 | A12 |
|---|---|---|---|---|---|---|---|---|---|---|---|---|---|---|
| Physical properties | | Number average particle diameter (nm) | 350 | 200 | 150 | 1,000 | 300 | 200 | 100 | 200 | 100 | 200 | 300 | 200 |
| | | Viscosity (pH 9, TSC 5%) (mPa·s) | 50 | 10 | 5 | 5 | 10 | 15 | 35 | 20 | 10 | 20 | 10 | 15 |
| | | Weight average molecular weight of THF-soluble components ($\times$1,000) | 30 | 100 | 500 | 1 | 5 | 300 | 150 | 100 | 10 | 500 | 100 | 200 |

Abbreviations for components in Table 1 above respectively represent the following compounds. In addition, a numerical value for each component in Table 1 above represents part(s) by mass.

<Conjugated Diene Compound>

·BD: 1,3-butadiene

<$\alpha,\beta$-Unsaturated Nitrile Compound>

·AN: acrylonitrile

<Aromatic Vinyl Compound>

·ST: styrene
·DVB: divinylbenzene

<Unsaturated Carboxylic Acid>

·TA: itaconic acid
·AA: acrylic acid
·MAA: methacrylic acid

<(Meth)acrylamide>

·AAM: acrylamide
·MAM: methacrylamide

<Unsaturated Carboxylic Acid Ester>

·MMA: methyl methacrylate
·BA: n-butyl acrylate
·2EHA: 2-ethylhexyl acrylate
·CHMA: cyclohexyl methacrylate
·EDMA: ethylene glycol dimethacrylate
·HEMA: 2-hydroxyethyl methacrylate
·HEA: 2-hydroxyethyl acrylate

<Compound having Sulfonic Acid Group>

·NASS: sodium styrenesulfonate

5.2. Synthesis of Polymer (B)

<Synthesis Example of Polymer (B1)>

A reaction vessel was charged with 900 parts by mass of water, 25 parts by mass of acrylic acid, and 75 parts by mass of acrylamide, and was loaded with 0.2 part by mass of potassium persulfate serving as a polymerization initiator. The contents were polymerized at 70°C for 10 hours, and the reaction was ended at a polymerization conversion rate of 98%. A 10% sodium hydroxide aqueous solution and water were added to the thus obtained polymer (B1) to provide a polymer (B1)-containing liquid having a solid content concentration of 5% and a pH of 9.

<Synthesis Examples of Polymer (B2) to Polymer (B12)>

Respective polymer-containing liquids were obtained by synthesizing polymers (B2) to (B12) in the same manner as in the synthesis example of the polymer (B1) except that the kinds and content ratios of the monomers used were changed as shown in Table 2 below.

<Solubility in Water>

At 25°C and 1 atm, whether or not 1 g of each of the polymers (B1) to (B12) obtained above was completely dissolved in 100 g of water was visually observed. The results are shown together in Table 2 below. In the table, a case in which the polymer was completely dissolved is represented by "A", and a case in which there was undissolved matter is represented by "B".

<pH Measurement>

The polymer-containing liquids obtained above were each measured for its pH at 25°C using a pH meter (manufactured by Horiba, Ltd.), and as a result, the pH of each of the polymer-containing liquids was found to be 9.0.

<Viscosity Measurement>

The polymer-containing liquids obtained above were each measured for its viscosity at a temperature of 25°C in conformity to JIS Z 8803. A viscometer used was a B-type viscometer (manufactured by Toki Sangyo Co., Ltd., model: "RB-80L"). The measurement results are shown together in Table 2 below.

<Weight Average Molecular Weight (Mw)>

The weight average molecular weight of each of the polymers (B) obtained above was measured using a GPC method under the following conditions. The measurement results are shown together in Table 2 below.

(Measurement Conditions)

·Measuring equipment: GPC (model number: HLC-8220) manufactured by Tosoh Corporation
·Columns: TSKgel guardcolumn $PW_{XL}$ (manufactured by Tosoh Corporation), TSK-GEL G2500$PW_{XL}$ (manufactured by Tosoh Corporation), and TSK-GEL GMPW$_{XL}$

(manufactured by Tosoh Corporation)

·Eluent: 0.1 M $NaNO_3$ aqueous solution

·Calibration curve: standard polyethylene oxide

·Measurement method: The polymer (B) is dissolved in the eluent so as to have a solid content of 0.3 wt%, and the solution is filtered through a filter, followed by measurement.

Table 2

| Classification | Monomer name | B1 | B2 | B3 | B4 | B5 | B6 | B7 | B8 | B9 | B10 | B11 | B12 |
|---|---|---|---|---|---|---|---|---|---|---|---|---|---|
| (b1) Unsaturated carboxylic acid | TA | 25 | | 20 | 25 | | | 10 | 10 | 90 | | 30 | |
| | AA | | 5 | 55 | 30 | 10 | 20 | 10 | | | 3 | 30 | 4 |
| | MAA | | | 20 | 20 | | | 20 | 10 | | | 30 | |
| (b2) (Meth)acrylamide | AAM | 75 | 65 | 5 | 25 | 20 | 50 | 50 | 10 | 10 | 40 | 3 | 4 |
| | MAM | | 30 | | | 20 | | | | | 57 | | |
| (b3) Conjugated diene compound | BD | | | | | | 10 | 5 | | | | 5 | 10 |
| (b4) α,β-Unsaturated nitrile compound | AN | | | | | | 5 | 5 | 10 | | | | 12 |
| (b5) Aromatic vinyl compound | ST | | | | | 20 | | | 10 | | | 2 | 30 |
| | DVB | | | | | | 5 | | 10 | | | | |
| (b6) Unsaturated carboxylic acid ester | MMA | | | | | | | | 10 | | | | |
| | BA | | | | | | | | | | | | |
| | 2EHA | | | | | | | | | | | | |
| | CHMA | | | | | | | | | | | | |
| | EDMA | | | | | | | | | | | | |
| | HEMA | | | | | | | | 10 | | | | |
| | HEA | | | | | | 10 | | | | | | 10 |
| (b7) Compound having sulfonic acid group | NASS | | | | | 30 | | | 20 | | | | 30 |
| Number of parts in composition | Total (parts by mass) | 100 | 100 | 100 | 100 | 100 | 100 | 100 | 100 | 100 | 100 | 100 | 100 |
| | (b1) Unsaturated carboxylic acid | 25 | 5 | 95 | 75 | 10 | 20 | 40 | 20 | 90 | 3 | 90 | 4 |
| | (b2) (Meth)acrylamide | 75 | 95 | 5 | 25 | 40 | 50 | 50 | 10 | 10 | 97 | 3 | 4 |
| | (b1)+(b2) | 100 | 100 | 100 | 100 | 50 | 70 | 90 | 30 | 100 | 100 | 93 | 8 |
| | (b1)+(b2)+(b6)+(b7) | 100 | 100 | 100 | 100 | 80 | 80 | 90 | 70 | 100 | 100 | 93 | 48 |

25

(continued)

| Classification | Monomer name | B1 | B2 | B3 | B4 | B5 | B6 | B7 | B8 | B9 | B10 | B11 | B12 |
|---|---|---|---|---|---|---|---|---|---|---|---|---|---|
| Physical properties | Solubility in water | A | A | A | A | A | A | A | A | A | A | A | B |
| | Viscosity (pH 9, TSC 5%) (mPa·s) | 10,000 | 5,000 | 1,000 | 200,000 | 20,000 | 50,000 | 100,000 | 150,000 | 5 | 2,200,000 | 20,000 | 300 |
| | Weight average molecular weight (×1,000) | 500 | 200 | 50 | 2,000 | 800 | 1,000 | 1,500 | 1,800 | 5 | 2,000 | 800 | 10 |

Abbreviations for components in Table 2 above are the same as those in Table 1 above. In addition, a numerical value for each component in Table 2 above represents parts by mass.

5.3. Example 1

5.3.1. Preparation and Evaluation of Composition for Electrical Storage Device

(1) Preparation of Composition for Electrical Storage Device

The polymer dispersion containing the polymer (A1) and the polymer-containing liquid containing the polymer (B 1), which were obtained above, were added in amounts corresponding to 10 parts by mass of the polymer (A1) and 90 parts by mass of the polymer (B1), respectively, and the mixture was stirred at 60 rpm for 1 hour to provide a composition for an electrical storage device to be used in Example 1.

(2) pH Measurement

The composition for an electrical storage device obtained above was measured for its pH at 25°C using a pH meter (manufactured by Horiba, Ltd.), and as a result, was found to have a pH of 9.0.

(3) Viscosity Measurement

The composition for an electrical storage device obtained above was measured for its viscosity at a temperature of 25°C in conformity to JIS Z 8803. A viscometer used was a B-type viscometer (manufactured by Toki Sangyo Co., Ltd., model: "RB-80L"). The measurement results are shown together in Table 3 below.

5.3.2. Preparation of Slurry for Electrical Storage Device Electrode

(1) Synthesis of Silicon Material (Active Material)

A mixture of pulverized silicon dioxide powder (average particle diameter: 10 $\mu$m) and carbon powder (average particle diameter: 35 $\mu$m) was subjected to heat treatment in an electric furnace, whose temperature had been adjusted to fall within the range of from 1,100°C to 1,600°C, under a stream of nitrogen (0.5 NL/min) for 10 hours to provide powder (average particle diameter: 8 $\mu$m) of a silicon oxide represented by the compositional formula $SiO_x$ (x=0.5 to 1.1). 300 g of the powder of the silicon oxide was loaded into a batch-type heating furnace, and while a reduced pressure of 100 Pa in terms of absolute pressure was maintained with a vacuum pump, the temperature was increased from room temperature (25°C) to 1,100°C at a temperature increase rate of 300°C/h. Then, while the pressure in the heating furnace was maintained at 2,000 Pa and while a methane gas was introduced at a flow rate of 0.5 NL/min, heat treatment (black lead coating treatment) was performed at 1,100°C for 5 hours. After the completion of the black lead coating treatment, the resultant was cooled to room temperature at a temperature decrease rate of 50°C/h to provide about 330 g of powder of black lead-coated silicon oxide. The black lead-coated silicon oxide was conductive powder (active material) of silicon oxide having its surface covered with black lead, the average particle diameter thereof was 10.5 $\mu$m, and the ratio of the black lead coating with respect to 100 mass% of the entirety of the obtained black lead-coated silicon oxide was 2 mass%.

(2) Preparation of Slurry for Electrical Storage Device Electrode

A twin-screw planetary mixer (manufactured by Primix Corporation, product name: "TK HIVIS MIX 2P-03") was charged with 0.4 part by mass of the polymer (A1) and 3.6 parts by mass of the polymer (B1) (value in terms of solid content, added as the obtained composition for an electrical storage device), 76 parts by mass (value in terms of solid content) of artificial black lead (manufactured by Hitachi Chemical Co., Ltd., product name: "MAG"), which was highly crystalline graphite, serving as a negative electrode active material, 19 parts by mass (value in terms of solid content) of the powder of the black lead-coated silicon oxide obtained above, and 1 part by mass of carbon (manufactured by Denka Company Limited, acetylene black) serving as a conductivity-imparting agent, and the contents were stirred at 60 rpm for 1 hour to provide a paste. Water was charged to the resultant paste to adjust its solid content concentration to 48 mass%, and then the contents were stirred and mixed using a defoaming stirrer (manufactured by Thinky Corporation, product name: "Awatori Rentaro") at 200 rpm for 2 minutes, at 1,800 rpm for 5 minutes, and then under a reduced pressure (about $2.5 \times 10^4$ Pa) at 1,800 rpm for 1.5 minutes to prepare a slurry for an electrical storage device electrode (C/Si=80/20) containing 20 mass% of Si in the negative electrode active material.

5.3.3. Production and Evaluation of Electrical Storage Device

(1) Production of Electrical Storage Device Electrode (Negative Electrode)

The slurry for an electrical storage device electrode (C/Si=80/20) obtained above was uniformly applied to the surface of a current collector formed of a copper foil having a thickness of 20 $\mu$m by a doctor blade method so that a film thickness after drying was 80 $\mu$m, and the resultant was dried at 60°C for 10 minutes and then subjected to drying treatment at 120°C for 10 minutes. After that, press processing was performed with a roll pressing machine so that the active material layer had a density of 1.5 g/cm$^3$. Thus, an electrical storage device electrode (negative electrode) was obtained.

(2) Evaluation of Adhesive Strength of Negative Electrode Coating Layer

In the surface of the electrode sheet obtained above, ten cuts each having a depth extending from the active material layer to the current collector were made with a knife at intervals of 2 mm in each of longitudinal and latitudinal directions, to thereby make cuts in a grid shape. A pressure-sensitive adhesive tape having a width of 18 mm (manufactured by Nichiban Co., Ltd., product name: "Cellotape" (trademark), specified in JIS Z1522) was attached to the cuts and immediately peeled off, and the degree of detachment of the active material was evaluated by visual judgment. Evaluation criteria are as described below. The evaluation result is shown in Table 3 below.

(Evaluation Criteria)

·Score 5: The number of detached pieces of the active material layer is 0.
·Score 4: The number of detached pieces of the active material layer is from 1 to 5.
·Score 3: The number of detached pieces of the active material layer is from 6 to 20.
·Score 2: The number of detached pieces of the active material layer is from 21 to 40.
·Score 1: The number of detached pieces of the active material layer is 41 or more.

(3) Production of Counter Electrode (Positive Electrode)

A twin-screw planetary mixer (manufactured by Primix Corporation, product name: "TK HIVIS MIX 2P-03") was charged with 4.0 parts by mass (value in terms of solid content) of a binder for an electrochemical device electrode (manufactured by Kureha Corporation, product name: "KF Polymer #1120", hereinafter abbreviated as "PVDF"), 3.0 parts by mass of a conductive aid (manufactured by Denki Kagaku Kogyo Kabushiki Kaisha, product name: "DENKA BLACK 50% press product"), 100 parts by mass (value in terms of solid content) of LiCoO$_2$ having an average particle diameter of 5 $\mu$m (manufactured by Hayashi Kasei Co., Ltd.) serving as a positive electrode active material, and 36 parts by mass of N-methylpyrrolidone (NMP), and the contents were stirred at 60 rpm for 2 hours. NMP was added to the resultant paste to adjust its solid content concentration to 65 mass%, and then the contents were stirred and mixed using a defoaming stirrer (manufactured by Thinky Corporation, product name: "Awatori Rentaro") at 200 rpm for 2 minutes, at 1,800 rpm for 5 minutes, and then under a reduced pressure (about $2.5 \times 10^4$ Pa) at 1,800 rpm for 1.5 minutes to prepare a slurry for a positive electrode. The slurry for a positive electrode was uniformly applied to the surface of a current collector formed of an aluminum foil by a doctor blade method so that a film thickness after solvent removal was 80 $\mu$m, and the solvent was removed by heating at 120°C for 20 minutes. After that, press processing was performed with a roll pressing machine so that the active material layer had a density of 3.0 g/cm$^3$. Thus, a counter electrode (positive electrode) was obtained.

(4) Assembly of Lithium Ion Battery Cell

In a glove box in which Ar purging had been performed so that the dew point was -80°C or less, the negative electrode produced above that had been punch-molded to a diameter of 15.95 mm was placed on a bipolar coin cell (manufactured by Hohsen Corp., product name: "HS Flat Cell"). Then, a separator formed of a porous film made of polypropylene that had been punched to a diameter of 24 mm (manufactured by Celgard, LLC, product name: "Celgard #2400") was placed, and further, 500 $\mu$L of an electrolytic solution was injected in such a manner as not to let air in. After that, the positive electrode produced above that had been punch-molded to a diameter of 16.16 mm was placed, and the exterior body of the bipolar coin cell was fastened with screws for sealing. Thus, a lithium ion battery cell (electrical storage device) was assembled. The electrolytic solution used in this case is a solution obtained by dissolving LiPF$_6$ at a concentration of 1 mol/L in a solvent containing ethylene carbonate and ethyl methyl carbonate at a mass ratio of 1/1.

(5) Evaluation of Charge-Discharge Cycle Characteristic

For the electrical storage device produced above, in a thermostat controlled to a temperature of 25°C, charge was started at a constant current (1.0C). At the time point when the voltage reached 4.2 V, the charge was subsequently continued at a constant voltage (4.2 V). The time point when the current value reached 0.01C was defined as charge completion (cut-off). After that, discharge was started at a constant current (1.0C). The time point when the voltage reached 3.0 V was defined as discharge completion (cut-off), and a discharge capacity in the 1st cycle was calculated. In this manner, charge and discharge were repeated 100 times. A capacity retention ratio was calculated by the following equation and evaluated by the following criteria. The evaluation result is shown in Table 3 below.

Capacity retention ratio (%) = (discharge capacity in 100th cycle)/(discharge capacity in 1st cycle)

(Evaluation Criteria)

·Score 5: The capacity retention ratio is 95% or more.
·Score 4: The capacity retention ratio is from 90% or more to less than 95%.
·Score 3: The capacity retention ratio is from 85% or more to less than 90%.
·Score 2: The capacity retention ratio is from 80% or more to less than 85%.
·Score 1: The capacity retention ratio is from 75% or more to less than 80%.
·Score 0: The capacity retention ratio is less than 75%.

In the measurement conditions, "1C" refers to a current value at which discharge is completed in 1 hour when a cell having a certain electric capacity is subjected to constant-current discharge. For example, "0.1C" refers to a current value at which discharge is completed in 10 hours, and "10C" refers to a current value at which discharge is completed in 0.1 hour.

5.4. Examples 2 to 9 and Comparative Examples 1 to 8 (Example 6 is not according to the invention).

Compositions for electrical storage devices were obtained in the same manner as in Example 1 except that, in the "5.3.1. Preparation and Evaluation of Composition for Electrical Storage Device (1) Preparation of Composition for Electrical Storage Device" section of Example 1 described above, the kinds and content ratios of the polymer (A) and the polymer (B) were changed as shown in Table 3 below or Table 4 below. Further, in the same manner as in Example 1 except for using the compositions for electrical storage devices thus prepared, slurries for electrical storage device electrodes were respectively prepared, and electrical storage device electrodes and electrical storage devices were respectively produced. Evaluations were performed in the same manner as in Example 1 described above.

5.5. Evaluation Results

The compositions of the compositions for electrical storage devices used in Examples 1 to 9 and Comparative Examples 1 to 8, and the respective evaluation results are summarized in Table 3 below and Table 4 below.

Table 3

| | Example | | | | | | | | |
|---|---|---|---|---|---|---|---|---|---|
| | 1 | 2 | 3 | 4 | 5 | 6 | 7 | 8 | 9 |
| Kind of polymer (A) | A1 | A2 | A3 | A4 | A5 | A6 | A7 | A8 | A3 |
| Kind of polymer (B) | B1 | B4 | B5 | B2 | B3 | B6 | B7 | B8 | B9 |
| Content ratio Ma of polymer (A) (part(s) by mass) | 10 | 20 | 5 | 1 | 50 | 80 | 25 | 2 | 5 |
| Content ratio Mb of polymer (B) (part(s) by mass) | 90 | 80 | 95 | 99 | 50 | 20 | 75 | 98 | 95 |
| Mass ratio Mb/Ma | 9 | 4 | 19 | 99 | 1 | 0.25 | 3 | 49 | 19 |

(continued)

| | | Example | | | | | | | | |
|---|---|---|---|---|---|---|---|---|---|---|
| | | 1 | 2 | 3 | 4 | 5 | 6 | 7 | 8 | 9 |
| Total amount of polymer (A) and polymer (B) (parts) | | 4 | 5 | 6 | 2 | 3 | 4 | 3 | 8 | 8 |
| Viscosity (pH 9, TSC 5%) (mPa·s) | | 100,000 | 150,000 | 20,000 | 5,000 | 500 | 3,000 | 30,000 | 50,000 | 5 |
| Evaluation results | Adhesive strength | 5 | 5 | 5 | 3 | 3 | 4 | 4 | 5 | 3 |
| | 100 Cy capacity retention ratio | 5 | 5 | 5 | 4 | 4 | 4 | 4 | 4 | 3 |

Table 4

| | | Comparative Example | | | | | | | |
|---|---|---|---|---|---|---|---|---|---|
| | | 1 | 2 | 3 | 4 | 5 | 6 | 7 | 8 |
| Kind of polymer (A) | | A1 | A2 | A3 | A9 | A10 | A11 | A12 | A9 |
| Kind of polymer (B) | | B10 | B11 | B12 | B1 | B2 | B3 | B4 | B10 |
| Content ratio Ma of polymer (A) (part(s) by mass) | | 10 | 30 | 50 | 70 | 20 | 10 | 5 | 0.9 |
| Content ratio Mb of polymer (B) (part(s) by mass) | | 90 | 70 | 50 | 30 | 80 | 90 | 95 | 99.1 |
| Mass ratio Mb/Ma | | 9 | 2.3 | 1 | 0.4 | 4 | 9 | 19 | 110 |
| Total amount of polymer (A) and polymer (B) (parts) | | 8 | 5 | 3 | 4 | 3 | 2 | 4 | 7 |
| Viscosity (pH 9, TSC 5%) (mPa·s) | | 200,000 | 10,000 | 200 | 3,000 | 4,000 | 900 | 190,000 | 220,000 |
| Evaluation results | Adhesive strength | 3 | 1 | 1 | 1 | 2 | 2 | 2 | 1 |
| | 100 Cy capacity retention ratio | 1 | 1 | 1 | 1 | 2 | 3 | 2 | 2 |

As apparent from Table 3, the negative electrodes produced using the compositions for electrical storage devices according to the invention of the present application shown in Examples 1 to 9 were each excellent in adhesiveness. In addition, the electrical storage devices including the negative electrodes were each excellent in capacity retention ratio after 100 cycles even when an active material containing a silicon material was used.

Meanwhile, as apparent from Table 4, the negative electrodes produced using the compositions for electrical storage devices shown in Comparative Examples 1 to 8 tended to be inferior in adhesiveness to those of Examples. In addition, the electrical storage devices including the negative electrodes tended to be reduced in capacity retention ratio after 100 cycles as well.

5.6. Examples 10 to 13

<Example 10>

In the same manner as in Example 7, the polymer dispersion (A7) and the polymer-containing liquid (B7) were added in amounts corresponding to 25 parts by mass of the polymer (A7) and 75 parts by mass of the polymer (B7), respectively, and the mixture was stirred at 60 rpm for 1 hour to provide a composition for an electrical storage device to be used in Example 10. Then, a twin-screw planetary mixer (manufactured by Primix Corporation, product name: "TK HIVIS MIX 2P-03") was charged with prior added components, i.e., 1 part by mass of a thickener (product name: "CMC2200", manufactured by Daicel Corporation) (value in terms of solid content, added as an aqueous solution having a concentration of 2 mass%), 3 parts by mass (value in terms of solid content) of the above-mentioned composition for an electrical storage device, 76 parts by mass (value in terms of solid content) of artificial black lead (manufactured by Hitachi Chemical Co., Ltd., product name: "MAG"), which was highly crystalline graphite, serving as a negative electrode active material, 19 parts by mass (value in terms of solid content) of the powder of the black lead-coated silicon oxide obtained above, and 1 part by mass of carbon (manufactured by Denka Company Limited, acetylene black) serving as a conductivity-imparting agent, and the contents were stirred at 60 rpm for 1 hour to provide a paste. Water was charged to the resultant paste to adjust its solid content concentration to 48 mass%, and then the contents were stirred and mixed using a defoaming stirrer (manufactured by Thinky Corporation, product name: "Awatori Rentaro") at 200 rpm for 2 minutes, at 1,800 rpm for 5 minutes, and then under a reduced pressure (about $2.5 \times 10^4$ Pa) at 1,800 rpm for 1.5 minutes to prepare a slurry for an electrical storage device electrode (C/Si=80/20) containing 20 mass% of Si in the negative electrode active material.

An electrical storage device electrode and an electrical storage device were each produced in the same manner as in Example 1 described above except that the slurry for an electrical storage device electrode obtained above was used. Evaluations were performed in the same manner as in Example 1 described above.

<Example 11>

An electrical storage device electrode and an electrical storage device were each produced in the same manner as in Example 10 described above except that, in the slurry for an electrical storage device electrode obtained in Example 10 described above, the amount of the thickener was changed to 3 parts by mass. Evaluations were performed in the same manner as in Example 1 described above.

<Examples 12 and 13>

Electrical storage device electrodes and electrical storage devices were respectively produced in the same manner as in Example 10 and Example 11 described above except that, in the slurries for electrical storage device electrodes obtained in Example 10 and Example 11 described above, a composition for an electrical storage device obtained by adding the polymer dispersion (A3) and the polymer-containing liquid (B9) in amounts corresponding to 5 parts by mass and 95 parts by mass, respectively, as in Example 9 was used. Evaluations were performed in the same manner as in Example 1 described above.

5.7. Evaluation Results

The compositions of the compositions for electrical storage devices used in Examples 10 to 13, and the respective evaluation results are summarized in Table 5 below.

Table 5

| | | | Example | | | |
|---|---|---|---|---|---|---|
| | | | 10 | 11 | 12 | 13 |
| Composition for electrical storage device of Example 7 (solid content concentration, parts by mass) | | | 3 | 3 | | |
| Composition for electrical storage device of Example 9 (solid content concentration, parts by mass) | | | | | 3 | 3 |
| Thickener (part(s) by mass) | | | 1 | 3 | 1 | 3 |
| Evaluation results | Adhesive strength | | 5 | 5 | 4 | 5 |
| | 100 Cy capacity retention ratio | | 4 | 5 | 4 | 5 |

As apparent from Table 5, it was found that the slurries for electrical storage device electrodes prepared using the compositions for electrical storage devices according to the invention shown in Examples 10 to 13 were each able to suitably bind active materials each having a large volume change along with charge and discharge to each other, and besides, were each able to satisfactorily maintain the adhesiveness active material layer and the current collector, despite the combined use of the CMC as the thickener.

The invention is not limited to the embodiments described above, and various modifications within the scope of the appended claims may be made thereto.

**Claims**

1. A composition for an electrical storage device, comprising:

   polymer particles (A);
   a water-soluble polymer (B); and
   a liquid medium (C),
   wherein the polymer particles (A) each contain, with respect to 100 parts by mass in total of repeating units contained in the polymer particle (A),

   20 parts by mass to 65 parts by mass of a repeating unit (al) derived from a conjugated diene compound, and
   1 part by mass to 30 parts by mass of a repeating unit (a2) derived from an $\alpha,\beta$-unsaturated nitrile compound, and

   wherein the polymer (B) contains, with respect to 100 parts by mass in total of repeating units contained in the polymer (B),

   5 parts by mass to 95 parts by mass of a repeating unit (b1) derived from an unsaturated carboxylic acid, and
   5 parts by mass to 95 parts by mass of a repeating unit (b2) derived from (meth)acrylamide.

2. The composition for an electrical storage device according to claim 1, wherein the composition for an electrical storage device has a value for Mb/Ma of from 0.25 to 99, where Ma represents a content of the polymer particles (A) in parts by mass, and Mb represents a content of the polymer (B) in parts by mass.

3. The composition for an electrical storage device according to claim 1 or 2, wherein the polymer particles (A) have a number average particle diameter of 50 nm or more and 500 nm or less, wherein the number average particle diameter is determined as follows:
   the particle size distribution of each of the polymer is measured with a particle size distribution-measuring apparatus employing a dynamic light scattering method as its measurement principle, and a number average particle diameter is determined from the particle size distribution under the following measurement conditions:

   Dispersion medium: water
   Measurement temperature: 25°C
   Dilution factor: 0.1 wt%
   Scattering angle: 160°
   Light source laser wavelength: 632.8 nm.

4. The composition for an electrical storage device according to any one of claims 1 to 3, wherein the liquid medium (C) is water.

5. A slurry for an electrical storage device electrode, comprising:

   the composition for an electrical storage device of any one of claims 1 to 4; and
   an active material.

6. The slurry for an electrical storage device electrode according to claim 5, wherein the active material is a silicon material.

7. The slurry for an electrical storage device electrode according to claim 5 or 6, further comprising a thickener.

8. An electrical storage device electrode comprising:

   a current collector; and

an active material layer formed on a surface of the current collector by applying and drying the slurry for an electrical storage device electrode of any one of claims 5 to 7.

9. An electrical storage device comprising the electrical storage device electrode of claim 8.

**Patentansprüche**

1. Zusammensetzung für eine elektrische Speichervorrichtung, umfassend:

   Polymerteilchen (A);
   ein wasserlösliches Polymer (B); und
   ein flüssiges Medium (C),
   wobei die Polymerteilchen (A) jeweils, bezogen auf insgesamt 100 Masseteile der in dem Polymerteilchen (A) enthaltenen Wiederholungseinheiten,

   20 bis 65 Masseteile einer Wiederholungseinheit (a1), die von einer konjugierten Dienverbindung abgeleitet ist, und
   1 bis 30 Masseteile einer Wiederholungseinheit (a2), die von einer $\alpha,\beta$-ungesättigten Nitrilverbindung abgeleitet ist, enthalten, und

   wobei das Polymer (B), bezogen auf insgesamt 100 Masseteile der in dem Polymer (B) enthaltenen Wiederholungseinheiten,

   5 bis 95 Masseteile einer Wiederholungseinheit (b1), die von einer ungesättigten Carbonsäure abgeleitet ist, und
   5 bis 95 Masseteile einer Wiederholungseinheit (b2), die von (Meth)acrylamid abgeleitet ist, enthält.

2. Zusammensetzung für eine elektrische Speichervorrichtung nach Anspruch 1, wobei die Zusammensetzung für eine elektrische Speichervorrichtung einen Wert für Mb/Ma von 0,25 bis 99 aufweist, wobei Ma einen Gehalt der Polymerteilchen (A) in Masseteilen darstellt und Mb einen Gehalt des Polymers (B) in Masseteilen darstellt.

3. Zusammensetzung für eine elektrische Speichervorrichtung nach Anspruch 1 oder 2, wobei die Polymerteilchen (A) einen zahlenmittleren Teilchendurchmesser von 50 nm oder mehr und 500 nm oder weniger aufweisen, wobei der zahlenmittlere Teilchendurchmesser wie folgt bestimmt ist:
   die Teilchengrößenverteilung eines jeden Polymers wird mit einem Teilchengrößenverteilungsmessgerät gemessen, das ein dynamisches Lichtstreuungsverfahren als Messprinzip verwendet, und ein mittlerer Teilchendurchmesser wird aus der Teilchengrößenverteilung unter den folgenden Messbedingungen bestimmt:

   Dispersionsmedium: Wasser
   Messtemperatur: 25 °C
   Verdünnungsfaktor: 0,1 Gew.-%
   Streuwinkel: 160°
   Laserwellenlänge der Lichtquelle: 632,8 nm.

4. Zusammensetzung für eine elektrische Speichervorrichtung nach einem der Ansprüche 1 bis 3, wobei das flüssige Medium (C) Wasser ist.

5. Aufschlämmung für eine Elektrode einer elektrischen Speichervorrichtung, umfassend:

   die Zusammensetzung für eine elektrische Speichervorrichtung nach einem der Ansprüche 1 bis 4; und
   ein Aktivmaterial.

6. Aufschlämmung für eine Elektrode einer elektrischen Speichervorrichtung nach Anspruch 5, wobei das Aktivmaterial ein Siliziummaterial ist.

7. Aufschlämmung für eine Elektrode einer elektrischen Speichervorrichtung nach Anspruch 5 oder 6, die ferner ein Verdickungsmittel umfasst.

8. Elektrode für eine elektrische Speichervorrichtung, umfassend:

   einen Stromabnehmer; und
   eine Aktivmaterialschicht, die auf einer Oberfläche des Stromabnehmers durch Aufbringen und Trocknen der Aufschlämmung für eine Elektrode für ein elektrisches Speichergerät nach einem der Ansprüche 5 bis 7 gebildet ist.

9. Elektrische Speichervorrichtung, umfassend die Elektrode für eine elektrische Speichervorrichtung nach Anspruch 8.

**Revendications**

1. Composition pour un dispositif de stockage électrique, comprenant :

   des particules de polymère (A) ;
   un polymère hydrosoluble (B) ; et
   un milieu liquide (C),
   les particules de polymère (A) contenant chacune, rapporté à un total de 100 parties en masse de motifs répétitifs contenus dans la particule de polymère (A),
   20 parties en masse à 65 parties en masse d'un motif répétitif (a1) dérivé d'un composé diène conjugué, et
   1 partie en masse à 30 parties en masse d'un motif répétitif (a2) dérivée d'un composé nitrile $\alpha,\beta$-insaturé, et
   le polymère (B) contenant, rapporté à un total de 100 parties en masse de motifs répétitifs contenus dans le polymère (B),
   5 parties en masse à 95 parties en masse d'un motif répétitif (b1) dérivé d'un acide carboxylique insaturé, et
   5 parties en masse à 95 parties en masse d'un motif récurrent (b2) dérivé de (méth)acrylamide.

2. Composition pour un dispositif de stockage électrique selon la revendication 1, la composition pour un dispositif de stockage électrique ayant une valeur de Mb/Ma allant de 0,25 à 99, où Ma représente une teneur des particules de polymère (A) en parties en masse, et Mb représente une teneur du polymère (B) en parties en masse.

3. Composition pour un dispositif de stockage électrique selon la revendication 1 ou 2, dans laquelle les particules de polymère (A) ont un diamètre de particules moyen en nombre de 50 nm ou plus et 500 nm ou moins, le diamètre de particules moyen en nombre étant déterminé comme suit :
   la distribution de taille de particules de chacun des polymères est mesurée avec un appareil de mesure de distribution de taille de particules employant un procédé de diffusion dynamique de la lumière comme principe de mesure, et un diamètre de particules moyen en nombre est déterminé à partir de la distribution de taille de particules dans les conditions de mesure suivantes :

   Milieu de dispersion : eau
   Température de mesure : 25 °C
   Facteur de dilution : 0,1 % en poids
   Angle de diffusion : 160°
   Longueur d'onde du laser de la source de lumière : 632,8 nm.

4. Composition pour un dispositif de stockage électrique selon l'une quelconque des revendications 1 à 3, dans laquelle le milieu liquide (C) est l'eau.

5. Suspension pour une électrode de dispositif de stockage électrique, comprenant :

   la composition pour un dispositif de stockage électrique de l'une quelconque des revendications 1 à 4 ; et
   un matériau actif.

6. Suspension pour une électrode de dispositif de stockage électrique selon la revendication 5, dans laquelle le matériau actif est un matériau à base de silicium.

7. Suspension pour une électrode de dispositif de stockage électrique selon la revendication 5 ou 6, comprenant en outre un épaississant.

**8.** Électrode de dispositif de stockage électrique comprenant :

un collecteur de courant ; et
une couche de matériau actif formée sur une surface du collecteur de courant par application et séchage de la suspension pour une électrode de dispositif de stockage électrique de l'une quelconque des revendications 5 à 7.

**9.** Dispositif de stockage électrique comprenant l'électrode de dispositif de stockage électrique de la revendication 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004185810 A
- WO 2011096463 A1
- WO 2013191080 A1
- JP 2010205722 A
- JP 2010003703 A
- JP 2011204592 A
- WO 2010113940 A1
- JP 2012216322 A

- US 2015132644 A1
- US 2018258202 A1
- WO 2019065471 A1
- EP 3214676 A1
- US 2016036055 A1
- JP 5999399 B